# EUROPEAN PATENT APPLICATION

(11) **EP 4 628 429 A1**
(43) Date of publication of application: **08.10.2025**
(21) Application number: 23896581.8
(22) Date of filing: 20.11.2023
(51) Int. Cl.: B65G 1/04

(54) **COMMODITY SORTING AND SEEDING METHOD, APPARATUS AND SYSTEM, AND COMPUTING DEVICE AND STORAGE MEDIUM**

(30) Priority: 30.11.2022 CN 202211519712; 30.11.2022 CN 202211519701
(71) Applicant: Beijing Geekplus Technology Co. Ltd, Beijing 100102 (CN)
(72) Inventor: WANG, Xu, Beijing 100102 (CN); WANG, Mengdi, Beijing 100102 (CN)
(74) Representative: De Sandre, Emanuele
(86) International application number: PCT/CN2023/132643
(87) International publication number: WO 2024/114429

(57) **Abstract**

A commodity sorting and seeding method, which is applied to a control end in a commodity sorting and seeding system. The commodity sorting and seeding system comprises a sorting station, a seeding station and a control end, wherein the sorting station shares an operating space with the seeding station, and the seeding station comprises a seeding mechanism. The method comprises: when it is identified that a container to be sorted arrives at a sorting station, a control end sending a sorting and seeding prompt instruction to a sorting and seeding object in an operating space, so as to prompt the sorting and seeding object to sort commodities in said container and seed the sorted commodities into an order container, which is placed on a seeding mechanism; and when it is identified that the seeding of the order container is completed, sending a transfer instruction to a transfer object, so as to instruct the transfer object to transfer the order container from the seeding mechanism to a shelf or a first conveyor belt.

## Description

The present disclosure claims priority to Chinese Application No. 202211519712.5 filed on November 30, 2022, and priority to Chinese Application No. 202211519701.7 filed on November 30, 2022, the entire contents of which are incorporated by reference into the present disclosure.

### TECHNICAL FIELD

The present disclosure relates to the field of warehousing technology, and specifically to a goods picking and sorting method and apparatus, a system, a computing device and a storage medium.

### BACKGROUND

As online shopping becomes more and more popular among the public, the number of online orders has surged. In order to meet needs of users for goods and services, merchants need to store a large number of various material boxes in a warehouse and complete picking of goods and allocation of orders.

### SUMMARY

Embodiments of the present disclosure provide a goods picking and sorting method and apparatus, a goods picking and sorting system, a computing device and a computer-readable storage medium.

According to some embodiments of the present disclosure, there is provided a goods picking and sorting method, applied to a control end in a goods picking and sorting system, in which the goods picking and sorting system includes a picking station, a sorting station and the control end, the picking station and the sorting station share an operating space, and the sorting station includes a sorting mechanism, a box-taking mechanism and a shelf; the method includes: in a case that a to-be-picked container arrives at the picking station, sending a picking and sorting prompt instruction to a picking and sorting object in the operating space to prompt the picking and sorting object to pick goods in the to-be-picked container, and to sort picked goods into an order container pre-placed on the sorting mechanism; and in a case that sorting is completed for the order container, sending a transferring instruction to a transferring object to instruct the transferring object to transfer the order container for which sorting is completed from the sorting mechanism to the shelf, or to instruct the transferring object to transfer the order container for which sorting is completed from the sorting mechanism to a first conveyor belt, in which the first conveyor belt is used to transport the order container for which sorting is completed to a target processing point position.

According to some embodiments of the present disclosure, there is provided a goods picking and sorting apparatus, applied to a goods picking and sorting system, in which the goods picking and sorting system includes a picking station, a sorting station and a control end, the picking station and the sorting station share an operating space, and the sorting station includes a sorting mechanism; the apparatus includes: a picking and sorting module, configured to, in a case that a to-be-picked container arrives at the picking station, send a picking and sorting prompt instruction to a picking and sorting object in the operating space to prompt the picking and sorting object to pick goods in the to-be-picked container, and to sort picked goods into an order container pre-placed on the sorting mechanism; and a scheduling module, configured to, in a case that sorting is completed for the order container, send a transferring instruction to a transferring object to instruct the transferring object to transfer the order container for which sorting is completed from the sorting mechanism to a shelf, or to instruct the transferring object to transfer the order container for which sorting is completed from the sorting mechanism to a first conveyor belt, in which the first conveyor belt is used to transport the order container for which sorting is completed to a target processing point position.

According to some embodiments of the present disclosure, there is provided a goods picking and sorting system including a picking station, a sorting station and a control end, in which the sorting station includes a sorting mechanism; the picking station and the sorting station share an operating space, a picking and sorting object is located within the operating space, the picking and sorting object is configured to pick goods in a to-be-picked container of the picking station, and to sort picked goods into an order container placed on the sorting mechanism; the control end is configured to, in a case that the to-be-picked container arrives at the picking station, send a picking and sorting prompt instruction to the picking and sorting object; in a case that sorting is completed for the order container, send a transferring instruction to a transferring object to instruct the transferring object to transfer the order container for which sorting is completed from the sorting mechanism to a shelf, or to instruct the transferring object to transfer the order container for which sorting is completed from the sorting mechanism to a first conveyor belt, in which the first conveyor belt is used to transport the order container for which sorting is completed to a target processing point position.

According to some embodiments of the present disclosure, there is provided a computing device, including: a memory and a processor. The memory is configured to store computer-executable instructions, the processor is configured to execute the computer-executable instructions, to implement the goods picking and sorting method described above.

According to some embodiments of the present disclosure, there is provided computer-readable storage medium for storing computer instructions. When the computer instructions are executed by a processor, the goods picking and sorting method described above is implemented.

With the goods picking and sorting method provided in the present disclosure, by setting the picking station and the sorting station to share the operating space, identifying the picking station by the control end and sending the picking and sorting prompt instruction to the picking and sorting object based on the identification result, the picking and sorting object may complete picking and sorting of goods in place without moving a distance, so that an overall operation time of picking and sorting is saved, thus achieving integration of picking and sorting, and improving an overall efficiency of picking and sorting.

### BRIEF DESCRIPTION OF THE DRAWINGS

FIG. 1A is a schematic diagram of a goods picking and sorting system according to an embodiment of the present disclosure;
FIG. 1B is a schematic diagram of a goods picking and sorting system according to an embodiment of the present disclosure;
FIG. 2 is a schematic flowchart of a system interaction of a goods picking and sorting system according to an embodiment of the present disclosure;
FIG. 3 is a flowchart of a goods picking and sorting method according to an embodiment of the present disclosure;
FIG. 4 is a schematic diagram of a goods picking and sorting system with a sorting rack configured as a sorting mechanism according to an embodiment of the present disclosure;
FIG. 5 is a schematic diagram of a goods picking and sorting system with a sorting mechanism including a conveyor belt according to an embodiment of the present disclosure;
FIG. 6A is a front view of a goods picking and sorting system according to an embodiment of the present disclosure, in which relative positions of a sorting platform and a first conveyor belt are provided in an upper and lower layer arrangement;
FIG. 6B is a top view of a goods picking and sorting system according to an embodiment of the present disclosure, in which relative positions of a sorting platform and a first conveyor belt are arranged in a same plane and adjacent to each other, and the sorting platform is a conveyor belt structure;
FIG. 6C is a top view of a goods picking and sorting system according to an embodiment of the present disclosure, in which relative positions of a sorting platform and a first conveyor belt are arranged in a same plane and adjacent to each other, and each sorting position is set as an independent conveyor belt structure;
FIG. 7 is a top view of a goods picking and sorting system with a shelf configured as a transporting mechanism according to an embodiment of the present disclosure;
FIG. 8 is a top view of a goods picking and sorting system with a second conveyor belt configured as a transporting mechanism according to an embodiment of the present disclosure;
FIG. 9 is a flowchart of a goods picking and sorting method applied to a workstation according to an embodiment of the present disclosure;
FIG. 10 is a block diagram of a goods picking and sorting apparatus according to an embodiment of the present disclosure;
FIG. 11 is a block diagram of a computing device according to an embodiment of the present disclosure.

### DETAILED DESCRIPTION

Specific details are described in the following description to facilitate a full understanding of the present disclosure. However, the present disclosure may be implemented in many ways other than those described herein, and those skilled in the art may make similar generalizations without violating the connotation of the present disclosure, so the present disclosure is not limited by specific implementations disclosed below.

The terms used in the embodiments of the present disclosure are solely for the purpose of describing a particular embodiment and are not intended to limit one or more embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, etc. may be used to describe various information in the embodiments of the present disclosure, such information should not be limited to these terms. These terms are used only to distinguish information in the same type from one another. For example, without leaving the scope of this embodiments of the present disclosure, the first one may also be referred to as the second one, and likewise the second one may be referred to as the first one. Depending on the context, the words "if" and "in a case" used here may be interpreted as "when" or "in response to determining".

First, the terms used in the following embodiments of the present disclosure are explained.

Picking and sorting object refers to a picking staff or a picking machine in a goods picking and sorting system that is capable of picking goods in a to-be-picked container at a picking station and sorting picked goods into a sorting mechanism.

Picking refers to a process of taking out goods from storage shelves or stacks and transporting them to an operation area according to a product name, specification, model, quantity, etc. required by an order.

Sorting refers to a process of classifying, loading and delivering the picked goods according to different destinations and distribution routes after the picking is completed.

Container, also called a material box or a cargo box, is a physical entity that carries goods/materials, including plastic box, carton, paper box, plastic baskets etc.

Shelf transporting device refers to a type of automated device that can transport shelves.

Transferring object refers to a staff or an automated device such as robotic arm in the goods picking and sorting system that is capable of transferring an order container for which sorting is completed at a sorting station to a transportation end.

Transportation end refers to a shelf or a cache rack in the goods picking and sorting system that carries the order container for which sorting is completed, or a conveyor belt that directly transports the order container for which sorting is completed to a next processing node.

Usually, when picking and allocating goods, first, the picking staff picks the goods near the shelf, and then transports the picked goods to a sorting wall to complete order allocation. However, after all the goods are picked, it takes a long time to transport them to the sorting wall for the order allocation, which seriously affects a working efficiency of picking and sorting.

In order to improve an efficiency of picking and sorting of a warehousing system, some embodiments of the present disclosure provide a goods picking and sorting method, which is applied to a goods picking and sorting system. The goods picking and sorting system includes a picking station, a sorting station and a control end. The picking station and the sorting station share an operating space, and the sorting station includes a sorting mechanism. With the method, by setting the picking station and the sorting station to share the operating space, and identifying the picking station by the control end and sending a picking and sorting prompt instruction to a picking and sorting object based on the identification result, the picking and sorting object may complete picking and sorting of the goods in situ without moving a distance, so that an overall operation time of picking and sorting is saved, thereby realizing integration of picking and sorting, and improving an overall efficiency of picking and sorting.

In some embodiments, when the control end recognizes that a to-be-picked container arrives at the picking station, the control end sends a picking and sorting prompt instruction to a picking and sorting object in the operation space to prompt the picking and sorting object to pick goods in the to-be-picked container, and to sort the picked goods into an order container on the sorting mechanism; when the control end recognizes that sorting is completed for the order container, the control end sends a transferring instruction to a transferring object to instruct the transferring object to transport the order container to the transportation end, in which the transportation end is used to transport the order container to a target processing point position.

For example, the sorting station may also include a box-taking object and a transporting mechanism. Before picking and sorting, the control end may first send a box-taking instruction to the box-taking object, and the box-taking object transfers the to-be-sorted order container from the transporting mechanism to the sorting mechanism according to the box-taking instruction.

In some examples, the transporting mechanism may be a shelf, a conveyor belt (such as a second conveyor belt), or a cache rack. For example, taking the box-taking object as a box-taking mechanism or a box-taking staff as an example, the box-taking object may transfer the to-be-sorted order container from the shelf to the sorting mechanism, or transfer the to-be-sorted order container from the second conveyor belt to the sorting mechanism, or transfer the to-be-sorted order container from the cache rack to the sorting mechanism. In other words, the to-be-sorted order container may be stored on the shelf, or on the cache rack, or may be transported through the second conveyor belt.

For example, the transportation end may be a shelf, a first conveyor belt, or a cache rack. When the transportation end is the shelf, the transferring object may transfer the order container for which sorting is completed from the sorting mechanism to the shelf, and after sorting is completed for all the order containers on the shelf, the shelf transporting device transports the shelf to the target processing point position. When the transportation end is the first conveyor belt, the transportation object may transfer the order container for which sorting is completed from the sorting mechanism to the first conveyor belt, and the first conveyor belt transports the order container for which sorting is completed to the target processing point position. When the transportation end is the cache rack, the transferring object may transfer the order container for which sorting is completed from the sorting mechanism to the cache rack, and when the shelf arrives near the cache rack or sorting is completed all the containers stored on the cache rack, the order containers on the cache rack are transferred to the shelf, and the shelf is transported to the target processing point position by the shelf transporting device. In other words, the order container for which sorting is completed can be placed on the shelf and transported to the target processing point position by transporting the shelf, or the order container for which sorting is completed can be transported to the target processing point position through the first conveyor belt, or the order container for which sorting is completed can be placed on the cache rack and transferred from the cache rack to the shelf, and the shelf is transported to the target processing point position by the shelf transporting device.

In some embodiments, the cache rack for placing to-be-sorted order containers and the cache rack for placing order containers for which sorting is completed may be the same cache rack or different cache racks, which is not limited in the embodiments of the present disclosure.

In some embodiments, the sorting mechanism may include a sorting platform and a first conveyor belt; in other embodiments, the sorting mechanism may be a sorting rack, and the embodiments of the present disclosure do not limit the type of the sorting mechanism. The following embodiments are combined with different structural forms of goods picking and sorting systems to introduce the goods picking and sorting methods corresponding to goods picking and sorting systems.

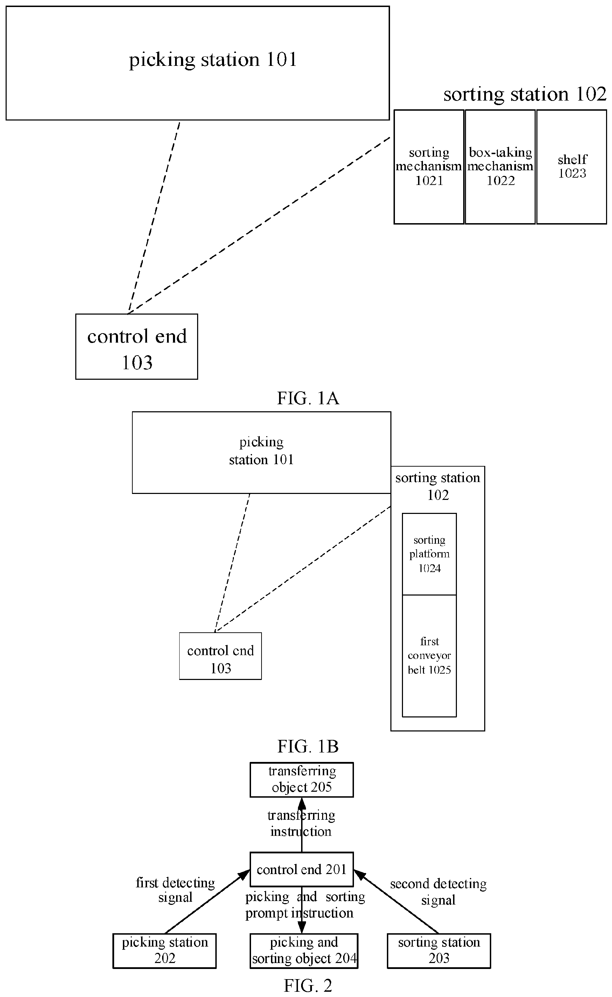

FIG. 1A is a schematic diagram of a goods picking and sorting system according to some embodiments of the present disclosure. As shown in FIG. 1A, the goods picking and sorting system includes a picking station 101, a sorting station 102 and a control end 103. The sorting station 102 includes a sorting mechanism 1021, a box-taking mechanism 1022 and a shelf 1023. The dotted line portion in FIG. 1A indicates that the picking station 101 and the sorting station 102 are respectively communicatively connected with the control end 103.

The picking station 101 shares an operating space with the sorting station 102, and a picking and sorting object is located in the operating space. The operating space is a workspace for the picking and sorting object to pick and sort goods. The picking and sorting object is configured to pick goods in a to-be-picked container of the picking station 101, and sort the picked goods into the order container placed on the sorting mechanism 1021. The order container is a container pre-transferred from the shelf 1023 to the sorting mechanism 1021 by the box-taking mechanism 1022.

The control end 103 and the picking station 101 are communicatively connected, as well as the control end 103 and the sorting station 102 are communicatively connected, and the communication connection method may be a wireless communication connection method such as Bluetooth, wireless fidelity (WIFI), or a wired communication connection method such as a wire, optical fiber, etc.

The control end 103 is configured to send a picking and sorting prompt instruction to the picking and sorting object in a case of identifying that a to-be-picked container arrives at the picking station 101; and to send a transferring instruction to the transferring object in a case of identifying that sorting is completed for an order container, so as to instruct the transferring object to transport the order container to the transportation end. The transportation end is used to transport the order container to the target processing point position.

The picking station 101 is provided with a picking robot, a picking shelf and a picking platform. The picking shelf is used to place to-be-picked containers. When there is a picking task, the shelf transporting device transports a target picking shelf from a warehouse to the picking station. The picking robot transfers a to-be-picked container from the picking shelf to the picking platform, so that the picking and sorting object picks goods in the to-be-picked container. The picking robot may be in the form of a mechanical arm, a box-changing pull rod, a push rod, etc., and the embodiments of the present disclosure do not limit a type of the picking robot. The picking platform may be a platform for placing the to-be-picked container that arrives at the picking station, so that the picking and sorting object may pick the goods therein. When the picking and sorting object is a picking and sorting staff, in order to facilitate a picking operation of the picking and sorting staff, a height of the picking platform may be set according to a height of the picking and sorting staff.

In some embodiments, in order to improve a picking efficiency, the picking and sorting object may also be a picking and sorting device, which may pick the goods in the to-be-picked container and sort the picked goods into the order container. For example, the picking and sorting device may be an automated device such as robotic arm.

The sorting station 102 includes a sorting mechanism, a box-taking mechanism and a shelf. The sorting mechanism is provided with a sorting position, which is used to place the to-be-sorted order container. The box-taking mechanism is configured to transfer the order container from the shelf to the sorting position of the sorting mechanism, so that the picking and sorting object may sort the goods into the order container. For example, the box-taking mechanism may be in the form of a mechanical arm, a box-changing pull rod, a push rod, etc. The box-taking mechanism is configured to receive an instruction sent by the control end 103, and automatically take out the box according to the instruction sent by the control end.

The shelf is used to store order containers. Initially, the order containers stored on the shelf are empty containers or containers with remaining sorting space. The shelf transporting device may pre-transport the shelf storing the order containers from an order warehouse to the sorting station. The picking and sorting object sorts the picked goods into the order container of the sorting mechanism at the sorting station 102.

In some examples, the sorting mechanism and the box-taking mechanism, as well as the box-taking mechanism and the shelf are connected together in a combined manner. The box-taking mechanism may move to different sides of the sorting mechanism, and the shelf may move to a corresponding placement position following the movement of the box-taking mechanism.

In actual applications, before the picking and sorting task begins, the order container on the shelf is transferred to the sorting position in the sorting mechanism by the box-taking mechanism in advance. After the picking and sorting object picks the goods each time, the picking and sorting object may directly sort the goods into the order container on the sorting position, to save the waiting time after the sorting object picks the goods, thus improving a sorting efficiency.

In some embodiments, the order containers on the shelf may be arranged in a single row or in multiple rows, and the box-taking mechanism may be set to be single deep or multi-deep. The embodiments of the present disclosure do not limit the arrangement of the order containers on the shelf and the depth number of the box-taking mechanism.

For example, when the order containers on the shelf are arranged in a single row and the box-taking mechanism is of single deep, the box-taking mechanism extends a depth from the side of the shelf facing the box-taking mechanism to pull the order containers on the shelf, or extends a depth from the other side of the shelf to push the order containers on the shelf towards the sorting mechanism (such as sorting platform).

For example, when the order containers on the shelf are arranged in multiple rows and the box-taking mechanism is of multi-deep, the box-taking mechanism extends one depth from the side of the shelf facing the box-taking mechanism to pull the order containers in the first row, and then extends two depths to pull the order containers in the second row, and so on. Alternatively, the box-taking mechanism extends one depth from the other side of the shelf to push the order containers in the first row on the shelf (such as the row closest to the sorting mechanism) towards the sorting mechanism (such as sorting platform), and then extends two depths to pull the order containers in the second row on the shelf towards the sorting mechanism, and so on.

For example, when the order containers on the shelf are arranged in double rows, the box-taking mechanism may also be of single deep. The box-taking mechanism may extend one depth from the side of the shelf facing the box-taking mechanism to pull the order containers in the first row, and then the control end 103 controls the shelf transporting robot to rotate the shelf by 180°, and the box-taking mechanism may extend one depth to pull the order containers in the second row. That is, by controlling the rotation of the shelf by the control end 103, the single deep box-taking mechanism can also be used to pick order containers on the double-deep shelf.

The control end 103 is configured to identify whether a to-be-picked container arrives at the picking station; if so, send a picking and sorting prompt instruction to the picking and sorting object in the operating space to prompt the picking and sorting object to pick goods in the to-be-picked container, and to sort the picked goods into the order container placed on the sorting mechanism. The control end 103 further identifies whether sorting is completed for the order container; if so, send a transferring instruction to the transferring object to instruct the transferring object to transport the order container to the transportation end, which is used to transport the order container to the target processing point position. For example, the control end may be a control platform, server, mobile device, etc. that is independent of the picking station and the sorting station, or may be a control chip, which can be installed at the picking station or the sorting station.

By implementing the solution of the embodiment of the present disclosure, the picking station and the sorting station are set to share the operating space, and the control end identifies the to-be-picked container at the picking station, and sends the picking and sorting prompt instruction to the picking and sorting object based on the identification result, so that the picking and sorting object may complete picking and sorting of the goods in place without moving too far, thereby saving an overall operation time of picking and sorting, realizing integration of picking and sorting, and improving an overall efficiency of picking and sorting.

FIG. 1B is a schematic diagram of a goods picking and sorting system provided by some embodiments of the present disclosure. As shown in FIG. 1B, the goods picking and sorting system includes a picking station 101, a sorting station 102 and a control end 103. The sorting station 102 includes a sorting mechanism, and the sorting mechanism includes a sorting platform 1024 and a first conveyor belt 1025. The dotted line portion in FIG. 1B indicates that the picking station 101 and the sorting station 102 are communicatively connected with the control end 103, respectively.

In the goods picking and sorting system shown in FIG. 1B, a picking and sorting object is configured to pick goods in a to-be-picked container of the picking station 101, and to sort the picked goods into an order container pre-placed on the sorting platform 1024. For example, the picking and sorting object may be a picking and sorting staff working in an operating space of the goods picking and sorting system, or may be an automated mechanical device such as robotic arm.

The control end 103 is configured to, in a case that sorting is completed for the order container, send a transferring instruction to a transferring object according to relative positions of the sorting platform 1024 and the first conveyor belt 1025, to prompt the transferring object to transfer the order container for which sorting is completed from the sorting platform 1024 to the first conveyor belt 1025. The first conveyor belt 1025 is used to transport the order container for which sorting is completed to a target processing point position.

The sorting station 102 includes the sorting platform 1024 and the first conveyor belt 1025. Sorting positions may be provided on the sorting platform 1024, and the sorting position is used to place a to-be-sorted order container.

In some examples, the sorting platform 1024 may be a platform structure or a conveyor belt structure. In case of the conveyor belt structure, each sorting position may be set as an independent conveyor belt structure. The first conveyor belt 1025 is used to transport the order container for which sorting is completed to the target processing point position. The first conveyor belt 1025 is always in a working state during a goods picking and sorting process to directly transport the order container placed on the first conveyor belt to the target processing point position.

In some embodiments, relative positions of the sorting platform 1024 and the first conveyor belt 1025 may be provided in an upper and lower layer arrangement, or may be arranged in the same plane and adjacent to each other. The order container on the sorting platform 1024 may be transferred to the first conveyor belt 1025 by the transferring object.

For example, the transferring object may be a picking and sorting staff working in the operating space of the goods picking and sorting system, or an automated device such as robotic arm working in the operating space of the goods picking and sorting system, or a box-taking mechanism arranged on a side of the sorting platform. The embodiments of the present disclosure do not limit a type of the transferring object.

The sorting station also includes a box-taking object and a transporting mechanism. In a case that the box-taking object is a box-taking mechanism and the transporting mechanism is a shelf, the box-taking mechanism is configured to transfer the order container from the shelf to the sorting position of the sorting platform, so that the picking and sorting object may sort the goods into the order container. The shelf is used to transport the to-be-sorted order container to the sorting station, and the shelf may be transported from an order warehouse to the sorting station 102 by a transporting device in advance. The picking and sorting object sorts the picked goods into the order container on the sorting platform at the sorting station 102.

In some examples, the sorting platform and the box-taking mechanism, as well as the box-taking mechanism and the shelf are connected together in a combined manner. The box-taking mechanism may move to different sides of the sorting platform, and the shelf may move to a corresponding placement position following the movement of the box-taking mechanism.

In some embodiments, the transporting mechanism may be a second conveyor belt. In the case where the transporting mechanism is the second conveyor belt, the box-taking object may transfer the order container from the second conveyor belt to the sorting position of the sorting platform, so that the picking and sorting object may sort the goods into the order container.

In some embodiments, the transporting mechanism may be a cache rack, which may be arranged near the sorting station 102. In the case where the transporting mechanism is a cache rack, the shelf on which the to-be-sorted order containers are placed may be transported to the sorting station 102 by a shelf transporting device in advance, and a box-taking device or a box-taking staff (also referred to as a box-taking object) may transfer the to-be-sorted order containers on the shelf to the cache rack, and then the box-taking object transfers the to-be-sorted order containers from the cache rack to the sorting position of the sorting platform, so that the picking and sorting object may sort the goods into the order container. By transferring the to-be-sorted order containers to the cache rack, the shelf may be released to perform other tasks.

For example, the box-taking object may be in the form of a robotic arm, a box-changing pull rod, a push rod, etc., or may be a picking and sorting staff. The box-taking object is used to receive an instruction sent by the control end 103, and transfer the to-be-sorted order container to the sorting platform according to the instruction sent by the control end.

In actual applications, before a picking and sorting task begins, the order container on the transportation mechanism (such as a shelf or a second conveyor belt or a cache rack) is transferred to the sorting position of the sorting platform by the box-taking object in advance. After the picking and sorting object picks the goods, the picked goods are sorted into the order container on the sorting position, thus saving the waiting time after the sorting object picks the goods and improving a sorting efficiency.

The control end 103 is configured to identify whether a to-be-picked container arrives at the picking station; if so, send a picking and sorting prompt instruction to the picking and sorting object in the operating space to prompt the picking and sorting object to pick goods in the to-be-picked container, and to sort the picked goods into the order container pre-placed on the sorting platform. The control end 103 further identifies whether sorting is completed for the order container; if so, send a transferring instruction to the transferring object according to relative positions of the sorting platform and the first conveyor belt, to instruct the transferring object to transfer the order container for which sorting is completed from the sorting platform to the first conveyor belt, which is used to transport the order container for which sorting is completed to the target processing point position.

It should be noted that the goods picking and sorting method corresponding to the goods picking and sorting system shown in FIG. 1B is similar to the goods picking and sorting method corresponding to the goods picking and sorting system shown in FIG. 1A, which will not be described in detail here. The goods picking and sorting method corresponding to the goods picking and sorting system shown in FIG. 1B may refer to the goods picking and sorting method corresponding to the goods picking and sorting system shown in FIG. 1A. In addition, since the difference between the goods picking and sorting system shown in FIG. 1B and the goods picking and sorting system shown in FIG. 1A is in that the sorting mechanism in the goods picking and sorting system shown in FIG. 1B includes the sorting platform 1024 and the first conveyor belt 1025, the control end 103 may send the transferring instruction to the transferring object according to the relative positions of the sorting platform and the first conveyor belt.

By implementing the solution of the embodiment of the present disclosure, the picking station and the sorting station are set to share the operating space, and the control end identifies the to-be-picked container at the picking station, and sends the picking and sorting prompt instruction to the picking and sorting object based on the identification result, so that the picking and sorting object may complete picking and sorting of the goods in place without moving too far, thereby saving an overall operation time of picking and sorting, and realizing integration of picking and sorting. In addition, by transferring the order container for which sorting is completed to the first conveyor belt, the order container may be quickly transported to the target processing point position by the first conveyor belt after sorting is completed, without waiting for sorting of other order containers to be completed, and it is unnecessary to schedule a transporting robot for transportation, thereby improving a processing efficiency of the order container for which sorting is completed, releasing the robot's transportation capacity, and thus improving an overall efficiency of picking and sorting.

FIG. 2 is a schematic flowchart of a system interaction of a goods picking and sorting system provided by some embodiments of the present disclosure. As shown in FIG. 2, the control end 201 receives a first detecting signal sent by the picking station 202, and the first detecting signal carries a detection result of whether a to-be-picked container arrives at the picking station 202. The control end 201 identifies the first detecting signal, and when identifying that the detection result is that a to-be-picked container arrives at the picking station 202, the control end 201 sends a picking and sorting prompt instruction to the picking and sorting object 204 in the operating space, so as to prompt the picking and sorting object 204 to pick the goods in the to-be-picked container, and to sort the picked goods into the order container placed on the sorting mechanism in the sorting station 203, in which the picking station 202 and the sorting station 203 share the operating space.

The control end 201 receives a second detecting signal sent by the sorting station 203, and the second detecting signal carries a detection result of whether sorting is completed for the order container. The control end 201 identifies the second detecting signal, and when identifying that the detection result is that sorting is completed for the order container placed on the sorting mechanism in the sorting station 203, the control end 201 sends a transferring instruction to the transferring object 205 to instruct the transferring object 205 to transport the order container to the transportation end, which is used to transport the order container to the target processing point position.

For example, in a case where the sorting mechanism includes the sorting platform and the first conveyor belt, the control end 201 sends a transferring instruction to the transferring object 205 according to the relative positions of the sorting platform and the first conveyor belt, so as to prompt the transferring object 205 to transfer the order container for which sorting is completed from the sorting platform to the first conveyor belt. It should be noted that, in a case where the sorting mechanism includes the sorting platform, the transferring object may also transfer the order container for which sorting is completed from the sorting mechanism to the shelf or the cache rack, which is not limited in the embodiments of the present disclosure.

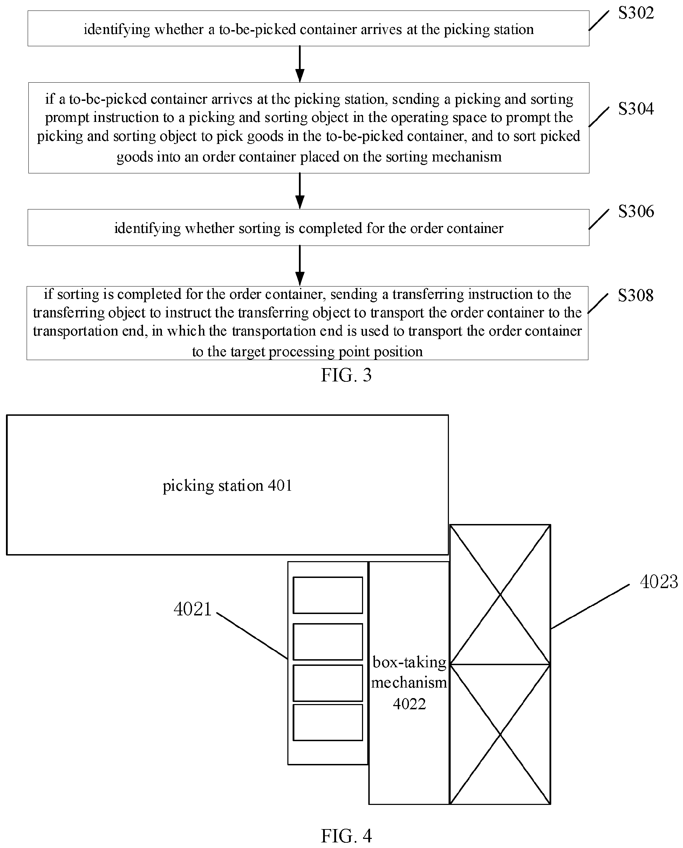

FIG. 3 is a flowchart of a goods picking and sorting method provided by some embodiments of the present disclosure. As shown in FIG. 3, the goods picking and sorting method is applied to a control end of the above-mentioned goods picking and sorting system. The goods picking and sorting system includes a picking station, a sorting station and the control end. The picking station and the sorting station share an operating space. The sorting station includes a sorting mechanism. The goods picking and sorting method includes the following steps.

At step S302, it is identified whether a to-be-picked container arrives at the picking station.

For example, when there is a picking task, a picking robot may transport the to-be-picked container from a picking shelf to the picking station. Picking can only start after the to-be-picked container arrives at the picking station. Therefore, it is required to identify whether a to-be-picked container arrives at the picking station. The to-be-picked container stores to-be-picked goods. The way to store the to-be-picked goods in the to-be-picked container may be storing the same type of goods in the same to-be-picked container, or storing goods with the same attribute such as position and price in the same to-be-picked container.

In some embodiments, a sensor (such as camera, infrared sensor, position sensor, etc.) provided at the picking station may be used to identify whether a to-be-picked container arrives at the picking station. For example, the sensor may detect whether a to-be-picked container arrives at the picking station and send a detection result to the control end, and the control end may identify whether a to-be-picked container arrives at the picking station based on the detection result.

In some embodiments, a sensor disposed in the goods picking and sorting system may be used to identify whether a to-be-picked container arrives at the picking station. For example, the sensor may be a camera, which takes a real-time photo of the picking station. When the camera captures a to-be-picked container arriving at the picking station, the camera sends a detection result to the control end, and the control end may determine whether a to-be-picked container arrives at the picking station based on the detection result.

The embodiments of the present disclosure do not limit the implementation method of how to identify whether a to-be-picked container arrives at the picking station. The above embodiments are illustrative using the example of identifying whether a to-be-picked container arrives at the picking station by the sensor disposed at the picking station or the goods picking and sorting system.

At step S304, if a to-be-picked container arrives at the picking station, a picking and sorting prompt instruction is sent to a picking and sorting object in the operating space to prompt the picking and sorting object to pick goods in the to-be-picked container, and to sort picked goods into an order container placed on the sorting mechanism.

If the control end identifies that a to-be-picked container arrives at the picking station, it indicates that the to-be-picked goods are in place, and the picking and sorting object may be notified to start picking. In some embodiments, the control end may send the picking and sorting prompt instruction to an operation object in the operating space. The picking and sorting prompt instruction may be in the form of voice or text, or in the form of a trigger message, which is not limited in the embodiments of the present disclosure.

In some examples, if the picking and sorting object is a picking and sorting staff, a picking and sorting prompt text or voice may be sent to the picking and sorting staff through a display screen or a speaker in the operating space. When the picking and sorting staff sees or hears the prompt, the picking and sorting staff may start picking the goods in the to-be-picked container.

In some examples, if the picking and sorting object is a picking and sorting device, a picking and sorting trigger message may be sent to the picking and sorting device in the operating space. After receiving the message, the picking and sorting device immediately responds and starts picking the goods in the to-be-picked container.

In some embodiments, integration of picking and sorting is implemented in the operating space. After the picking and sorting object picks the goods in the to-be-picked container, the picked goods may be directly sorted into the order container placed on the sorting mechanism of the same operating space. The order container placed on the sorting mechanism may be understood as the to-be-sorted order container. The to-be-sorted order container may be an empty container in an initial state, or may be a container with remaining sorting space.

In order to realize the integration of picking and sorting, after picking the goods in the to-be-picked container, the picking and sorting object may directly sort the picked goods into the order container placed on the sorting mechanism in the same operating space. Therefore, it is required to transfer the order container from a transporting mechanism to the sorting mechanism through a box-taking object in advance.

In some embodiments, the sorting station further includes a box-taking object and a transporting mechanism. The transporting mechanism is used to transport the to-be-sorted order container to the sorting station. Before sending the picking and sorting prompt instruction to the picking and sorting object in the operating space, the method may further include: sending a box-taking instruction to the box-taking object to prompt the box-taking object to transfer the to-be-sorted order container from the transporting mechanism to the sorting mechanism.

For example, in the case where the sorting mechanism includes a sorting platform, the to-be-sorted order container is transferred from the transporting mechanism to the sorting platform by the box-taking object in advance, and the picking and sorting object may directly sort the picked goods into the order container on the sorting platform, thereby reducing the time that the picking and sorting object waits for the order container on the sorting platform to arrive and improving an efficiency of picking and sorting.

For example, in a case that the box-taking object is a box-taking mechanism and the transporting mechanism is a shelf, the order container may be transferred from the shelf to the sorting mechanism by the box-taking mechanism in advance. That is, the order container is a container transferred from the shelf to the sorting mechanism by the box-taking mechanism in advance.

In some examples, when the box-taking mechanism transfers the order container from the transporting mechanism (such as shelf), it may randomly transfer a to-be-sorted order container to the sorting mechanism. In some embodiments, since a picking sequence and a sorting sequence of the picking and sorting object are often related, in order to further improve an efficiency of picking and sorting, sorting may be performed according to the picking sequence. Therefore, some embodiments of the present disclosure also provide a goods picking and sorting method, which is applied to the control end of the above-mentioned goods picking and sorting system. The picking station in the goods picking and sorting system includes a picking robot. Before the above-mentioned step S302, the method may also include: obtaining a grabbing sequence in which the picking robot grabs each to-be-picked container from the picking shelf; determining an arrangement sequence of order containers corresponding to goods in each to-be-picked container according to the grabbing order; generating a first box-taking instruction according to the arrangement sequence; sending the first box-taking instruction to the box-taking mechanism to drive the box-taking mechanism to transfer multiple order containers from the shelf to corresponding sorting positions of the sorting mechanism according to the arrangement sequence.

For example, when the picking robot grabs the to-be-picked containers from the picking shelf, there is a grabbing sequence, and the grabbing sequence may be a preset sequence. The picking robot grabs the to-be-picked containers according to the grabbing sequence, and the grabbing sequence may be notified to the control end in advance. In some examples, the picking robot may grab the to-be-picked containers randomly, and the control end recognizes the grabbing sequence in which the picking robot grabs respective to-be-picked containers in real time.

After the control end obtains the grabbing sequence in which the picking robot grabs respective to-be-picked containers, the control end may determine the arrangement sequence of the order containers corresponding to the goods in each to-be-picked container according to the grabbing sequence, because the earlier the to-be-picked container is grabbed, the greater the possibility that the goods in the to-be-picked container is earlier sorted. The arrangement sequence of the order containers refers to the arrangement sequence of the order containers on the sorting mechanism, which may be set according to whether it is convenient for the picking and sorting object to pick and sort, or may be set according to whether it is convenient for the order container for which sorting is completed to be directly transferred to the first conveyor belt.

For example, the to-be-picked containers may have a one-to-one correspondence with the order containers, that is, the sorted goods in one order container may be the goods in one to-be-picked container, or the sorted goods in one order container may also be the goods in multiple to-be-picked containers. Therefore, according to the grabbing order in which the picking robot grabs the to-be-picked containers, the arrangement sequence of the order containers may be set according to a sequence in which the to-be-picked containers covered by the goods to sorted are arranged from most to least.

After obtaining the arrangement sequence, a first box-taking instruction may be generated according to the arrangement sequence, and the message of the first box-taking instruction may carry the arrangement sequence. Then the first box-taking instruction is sent to the box-taking mechanism, because the first box-taking instruction carries the arrangement sequence of the order containers corresponding to the goods in each to-be-picked container, that is, which order container is placed on each sorting position of the sorting mechanism. The box-taking mechanism may transfer multiple order containers from the shelf to the corresponding positions of the sorting mechanism (such as the sorting platform) according to the arrangement sequence.

In some examples, the arrangement sequence is not equivalent to the sequence in which the box-taking mechanism takes out the order containers from the shelf. The box-taking mechanism may take out corresponding order containers from the shelf according to the arrangement sequence, and then place them at corresponding positions of the sorting mechanism; or the box-taking mechanism may randomly take out order containers from the shelf, and then place the taken-out order containers at the corresponding positions of the sorting mechanism according to the arrangement sequence.

**By** implementing the disclosed embodiment, before identifying whether there is a to-be-picked container arrives at the picking station, the order container is transferred from the shelf to the sorting mechanism by the box-taking mechanism in advance, so that the picking and sorting object may directly start picking and sorting after receiving the picking and sorting prompt instruction, without waiting for the box-taking mechanism to transfer the order container from the shelf to the sorting mechanism, thus saving waiting time and improving an overall efficiency of picking and sorting. In addition, according to the grabbing sequence in which the picking robot grabs each to-be-picked container from the picking shelf, the arrangement sequence of the order containers corresponding to the goods in each to-be-picked container is determined, and the box-taking mechanism transfers multiple order containers from the shelf to the corresponding positions of the sorting mechanism according to the arrangement sequence. In this way, the arrangement sequence of multiple order containers in the sorting mechanism may correspond to the sequence in which the to-be-picked containers arrive at the picking station, so that when the picking and sorting object picks and sorts goods, the goods in the to-be-picked container that arrives at the picking station first may be sorted into the order container arranged in the front in the sorting mechanism, and the picked goods may be sorted into the order containers arranged according to the arrangement sequence according to the sequence in which the to-be-picked containers arrive at the picking station, thereby further improving an efficiency of picking and sorting of the picking and sorting object.

**In** some embodiments, the sorting mechanism may be provided with multiple sorting positions. If the box-taking mechanism is notified to transport the order containers one by one or in batches, an efficiency of transporting the order containers from the shelf to the sorting mechanism may be low. In order to improve the efficiency of transporting the order containers, in some embodiments of the present disclosure, generating the first box-taking instruction according to the arrangement sequence may include: obtaining the number of sorting positions of the sorting mechanism (such as sorting platform); generating the first box-taking instruction according to the arrangement sequence and the number of sorting positions; and correspondingly, sending the first box-taking instruction to the box-taking mechanism may include: sending the first box-taking instruction to the box-taking mechanism to drive the box-taking mechanism to transfer multiple order containers that meet the number of sorting positions from the shelf to the corresponding sorting positions of the sorting mechanism according to the arrangement sequence and the number of sorting positions.

It should be noted that when the transporting mechanism is a cache rack or a second conveyor belt, the box-taking object may transfer multiple order containers that meet the number of sorting positions from the cache rack or the second conveyor belt to the corresponding sorting positions of the sorting mechanism according to the arrangement sequence and the number of sorting positions.

In order to improve the efficiency of transporting the order containers from the shelf (or cache rack or second conveyor belt) to the sorting mechanism (such as sorting platform), multiple order containers may be transported to the sorting mechanism at one time to fill the sorting mechanism, thereby making full use of the sorting mechanism and improving the efficiency of transporting the order containers.

In some examples, the number of sorting positions of the sorting mechanism may be obtained, and the number of sorting positions refers to the total number of sorting positions included in the sorting mechanism, and the sorting position is a position where the order container is placed. The number of sorting positions of the sorting mechanism may be fixed, so the control end may record the number of sorting positions in advance. In some examples, since the sorting mechanism is replaceable, a sensor (such as camera) may be set near the sorting mechanism, and the sensor collects information about the sorting mechanism, and the number of sorting positions is obtained according to a collection result of the sensor.

After obtaining the number of sorting positions, a first box-taking instruction may be generated according to the arrangement sequence and the number of sorting positions, and the message of the first box-taking instruction may carry the arrangement sequence and the number of sorting positions. The first box-taking instruction is sent to the box-taking mechanism. Since the first box-taking instruction carries the arrangement sequence of the order containers corresponding to the goods in each to-be-picked container and the number of sorting positions, the arrangement sequence is used to indicate which order container is placed on each sorting position of the sorting mechanism, and the number of sorting positions refers to the total number of sorting positions in the sorting mechanism. The box-taking mechanism may transfer multiple order containers that meet the number of sorting positions from the shelf to the corresponding positions of the sorting mechanism according to the arrangement sequence, so as to achieve the purpose of filling the sorting mechanism, make full use of the sorting mechanism, and improve the efficiency of transporting the order containers.

In some embodiments, the sorting mechanism may be a sorting wall. For example, the number of sorting positions on the sorting wall may be the same as the number of order containers that can be stored on a shelf. By setting the sorting mechanism as a sorting wall, the order containers on a whole shelf may be sorted at one time, which increases the number of sorted order containers and improves a hit rate of to-be-picked containers in the picking station. The operation of the box-taking mechanism to take out boxes or change boxes on the sorting wall will not affect the picking and sorting object to continue performing sorting on the sorting wall, which saves the waiting time of the picking and sorting object and improves the efficiency of picking and sorting.

In some embodiments, the transporting mechanism may be a cache rack, which is used to place to-be-sorted order containers and/or order containers for which sorting is completed, and the box-taking object (such as box-taking mechanism) may transfer the order containers from the cache rack to the sorting mechanism in advance. That is, the order container is a container that has been transferred from the cache rack to the sorting mechanism by the box-taking mechanism in advance. In the case where the transporting mechanism is a cache rack, sending the box-taking instruction to the box-taking object includes: sending the box-taking instruction to the box-taking object to prompt the box-taking object to transfer the to-be-sorted order container from the cache rack to the sorting mechanism.

For example, the shelf with the to-be-sorted order containers is transported to the sorting station by the shelf transporting device in advance, and the to-be-sorted order containers on the shelf are transferred to the cache shelf by the box-taking device or the box-taking staff. The box-taking object transfers the to-be-sorted order containers from the cache shelf to the sorting positions of the sorting platform, so that the picking and sorting object may sort the goods into the order containers. By transferring the to-be-sorted order containers to the cache shelf, the shelf may be released to perform other tasks.

When the transporting mechanism is a shelf, the to-be-sorted order container is transferred to the sorting mechanism through the shelf. It is necessary to coordinate the number of shelves and schedule the shelf transporting robot to transport the shelves to the corresponding positions of the sorting station. In order to further improve an overall efficiency of the goods picking and sorting system, release the robot's transportation capacity and reduce a computing pressure of the control end, the to-be-sorted order container may be directly transported to the sorting station through the conveyor belt structure. In some embodiments, the transporting mechanism may be a second conveyor belt, and sending the box-taking instruction to the box-taking object includes: generating a box-taking instruction in case of detecting that the second conveyor belt transports the to-be-sorted order container to a designated position; sending the box-taking instruction to the box-taking object to prompt the box-taking object to transfer the order container from the designated position to the sorting mechanism.

For example, the sorting mechanism may be a sorting platform or a sorting rack. Taking the sorting mechanism as a sorting platform as an example, the second conveyor belt is used to transport the to-be-sorted order container to the vicinity of the sorting platform in the sorting station, and the designated position refers to a position that is convenient for the box-taking object to transport. For example, the designated position may be above the sorting platform, so that people or robotic arms may transport the to-be-sorted order container to the sorting position of the sorting platform. The box-taking object may be a goods picking and sorting staff, or an automated device such as robotic arm. A sensor (such as camera) may be set near the sorting station, and the sensor collects information at the designated position, and detects whether the to-be-sorted order container has been transported to the designated position based on a collection result of the sensor.

The efficiency of transporting the to-be-sorted order containers may be further improved by transferring them from positions above or below the sorting platform to the sorting positions. Therefore, in some embodiments, the sorting station may further include cache positions, and the cache position is a position for caching the order container; the above-mentioned goods picking and sorting method also includes: obtaining the number of cache positions; generating an eighth box-taking instruction based on the number of cache positions; and sending the eighth box-taking instruction to the box-taking object to prompt the box-taking object to transfer multiple order containers from the transporting mechanism to each cache position based on the number of cache positions.

For example, the cache positions of the sorting mechanism (such as sorting platform) may serve as a supplement to the sorting positions, especially under a sorting platform with the conveyor belt structure. In order to further improve a sorting efficiency, cache positions may be set above or below the conveyor belt. The number of cache positions of the sorting platform may be obtained. The number of cache positions refers to the total number of cache positions in the sorting station. The number of cache positions of the sorting platform is generally fixed, so the control end may record the number of cache positions in advance.

After obtaining the number of cache positions, the eighth box-taking instruction may be generated according to the number of cache positions, and the message of the eighth box-taking instruction carries the number of cache positions. The eighth box-taking instruction is sent to the box-taking mechanism, and the box-taking mechanism may transfer multiple order containers that meet the number of cache positions from the transporting mechanism (such as shelf) to respective cache positions of the sorting station according to the eighth box-taking instruction, so as to achieve the purpose of filling the cache positions, make full use of the sorting station, and improve the efficiency of transporting the order containers.

At step S306, it is identified whether sorting is completed for the order container.

After sending the picking and sorting prompt instruction to the picking and sorting object, the picking and sorting object starts picking and sorting of the goods. The control end may identify whether sorting is completed for the order container. Sorting being completed for the order container may refer to the following two meanings: first, an order container is full of goods; second, sorting is completed for all the goods corresponding to the order container.

In some embodiments, the above step S306 includes: obtaining a remaining space in the order container each time one piece of picked goods is sorted, and determining that sorting is completed for the order container in a case that the remaining space is less than or equal to a preset space; or, determining each target goods corresponding to the order container, and determining that sorting is completed for the order container in a case that each target goods is sorted into the order container.

In some examples, a sensor is provided in the order container. Each time one piece of picked goods is sorted into the order container, the sensor may detect whether the remaining space of the order container is sufficient (less than or equal to the preset space). If the remaining space is less than or equal to the preset space, it means that the remaining space in the order container is insufficient, and it may be determined that sorting is completed for the order container. For example, the sensor provided in the order container may be an infrared sensor, which may determine, by infrared scanning, whether goods enters the order container, whether the remaining space is less than or equal to the preset space. In some examples, the sensor may also be a visual sensor such as a camera independent of the order container.

In some examples, the control end may identify the sorted goods. Since the control end knows which target goods needs to be sorted into each order container, after determining that each target goods has been sorted into the order container, the control end may determine that sorting is completed for the order container. Alternatively, according to the grabbing sequence in which the picking robot grabs each to-be-picked container from the picking shelf, information of the goods in the order container is obtained, and it is identified whether sorting is completed for the order container according to the grabbing sequence.

For example, the grabbing sequence in which the picking robot grabs each to-be-picked container from the picking shelf is: to-be-picked container A, to-be-picked container B, to-be-picked container C, where A, B, and C represent types of goods corresponding to the to-be-picked containers, and the target goods corresponding to the order container include 10 pieces of goods of type A, 20 pieces of goods of type B, and 50 pieces of goods of type C. The control end may identify the goods in the order container in the sequence of identifying whether 10 pieces of goods of type A have been sorted, whether 20 pieces of goods of type B have been sorted, and whether 50 pieces of goods of type C have been sorted. In the case of determining that all target goods corresponding to the order container have been sorted into the order container in the above sequence, it is determined that sorting is completed for the order container.

**In** some examples, in case of identifying that sorting is completed for an order container, when the transporting robot transports a new shelf that includes a new order container, the control end may drive the box-taking mechanism to pull the order container for which sorting is completed out of the sorting mechanism, move the new order container to the corresponding sorting position in the sorting mechanism, and prompt the picking and sorting object to sort the new order container.

In some embodiments, there may be a situation where the transporting mechanism that transports a new to-be-sorted order container to the sorting position, but sorting has not been completed for all the order containers on the sorting position yet. In this case, the control end may send a detecting signal to identify whether there is an order container which is not undergoing a sorting task among all the order containers on the sorting position. If there is an order container which is not undergoing the sorting task among the order containers on the sorting position, the control end may send an instruction to the box-taking object, to prompt the box-taking object to temporarily transfer the order container which is not undergoing the sorting task from the sorting position to the cache position, and move the new to-be-sorted order container to the corresponding sorting position in the sorting platform, so that the picking and sorting object may pick and sort the new to-be-sorted order container. When there is a vacant sorting position on the sorting platform, a to-be-picked container corresponding to an order container for which the sorting task is not completed that is previously transported to the cache position arrives at the picking station and the sorting task may be performed continually, the control end sends an instruction to the box-taking object, to prompt the box-taking object to transfer the order container from the cache position back to the sorting platform.

By transferring the order container at the sorting position that is not undergoing the sorting task to the cache position, the newly transported to-be-sorted order container that can directly undergo the sorting task may be sorted first, so that the sorting position may be fully utilized, thereby reducing the waiting time for the to-be-picked container to arrive at the picking platform, improving the sorting efficiency of the order container, and improving the overall efficiency of the goods picking and sorting system.

At step S308, if sorting is completed for the order container, a transferring instruction is sent to the transferring object to instruct the transferring object to transport the order container to the transportation end, in which the transportation end is used to transport the order container to the target processing point position.

In a case of identifying that sorting has been completed for the order container, the transferring instruction is sent to the transferring object to instruct the transferring object to transport the order container to the transportation end, and the transportation end transports the order container to the target processing point position, so that the order container for which sorting is completed can be further processed.

For example, the transferring object is configured to transport the order container for which sorting is completed to the transportation end, which may be a transporting robot, a shelf, a conveyor belt, a cache rack, etc. The target processing point position is a position where the order container for which sorting is completed is further processed. The order container for which sorting is completed may be further processed by transporting the order container to a next sorting station for continue sorting, or by packaging and boxing the goods in the order container for shipment.

In some embodiments, the sorting mechanism may be a sorting rack 4021. FIG. 4 is a schematic diagram of a goods picking and sorting system having a sorting rack used as the sorting mechanism provided by some embodiments of the present disclosure. As shown in FIG. 4, the transferring object is a box-taking mechanism 4022, and the transportation end is a shelf 4023. The above step S308 includes: sending the transferring instruction to the box-taking mechanism to drive the box-taking mechanism to transfer the order container for which sorting is completed from the sorting mechanism to the shelf; identifying whether sorting is completed for all the order containers on the shelf; if so, sending a transporting instruction to a shelf transporting device to schedule the shelf transporting device to transport the shelf to the target processing point position.

As shown in FIG. 4, after the control end identifies the order container for which sorting is completed, it can send a transferring instruction to the box-taking mechanism 4022, and the box-taking mechanism 4022 transfers the order container for which sorting is completed from the sorting rack 4021 to the shelf 4023 according to the transferring instruction. The control end may identify the order containers on the shelf 4023 to identify whether all the order containers on the shelf 4023 are order containers for which sorting has been completed. If all the order containers on the shelf 4023 are order containers for which sorting have been completed, it means that there is no to-be-sorted order container on the shelf 4023, and the shelf 4023 may be moved away. Therefore, a transporting instruction may be sent to the shelf transporting device to schedule the shelf transporting device to transport the shelf 4023 to the target processing point position.

By transferring the order containers for which sorting is completed from the sorting rack 4021 to the shelf 4023, and then transporting them to the target processing point position by the shelf transporting device, an automatic overall transportation of the order containers for which sorting is completed may be achieved, thereby improving the transporting efficiency.

In some embodiments, after identifying whether all the order containers on the shelf are order containers for which sorting has been completed, the method may further include: if it is identified that not all the order containers on the shelf are order containers for which sorting has been completed, sending a second box-taking instruction to the box-taking mechanism to drive the box-taking mechanism to transfer the order container for which sorting is not been completed from the shelf to the sorting mechanism.

If there is an order container for which sorting is completed on the shelf, since the order containers for which sorting is completed are transferred from the sorting mechanism to the shelf, there are vacant sorting positions on the sorting mechanism, so the control end may send the second box-taking instruction to the box-taking mechanism, and the second box-taking instruction is used to drive the box-taking mechanism to transfer the order container for which sorting is not completed from the shelf to the vacant sorting position of the sorting mechanism.

**By** sending the second box-taking instruction to the box-taking mechanism, the order containers in the sorting mechanism may be dynamically adjusted to ensure full utilization of the sorting mechanism and improve the overall efficiency of the picking and sorting system.

**In** some embodiments, the transportation end is a cache rack, and the transferring object is a box-taking mechanism. After the box-taking mechanism transfers the order container for which sorting is completed from the sorting mechanism to the cache rack, it is further determined whether all the order containers on the cache rack are order containers for which sorting is completed. In the case that all the order containers on the cache rack are order containers for which sorting is completed, a scheduling instruction is sent to the shelf transporting device to schedule the shelf transporting device to transport the shelf with a vacant placement position to the sorting station; a transferring instruction is sent to the box-taking mechanism to drive the box-taking mechanism to transfer the order container for which sorting is completed from the cache rack to the shelf with the vacant placement position; and a transporting instruction is sent to the shelf transporting device to schedule the shelf transporting device to transport the shelf with the order container to the target processing point position.

In the case where the order containers on the cache shelf include an order container for which sorting is not completed, a seventh box-taking instruction may be sent to the box-taking mechanism to drive the box-taking mechanism to transfer the order container for which sorting is not completed from the cache shelf to a vacant sorting position of the sorting mechanism. In this way, the order containers in the sorting mechanism may be adjusted dynamically to ensure full utilization of the sorting mechanism and improve the overall efficiency of the picking and sorting system.

In some embodiments, the sorting rack includes a sorting position and a cache position; accordingly, the method provided in the embodiments of the present disclosure may also include: in a case that sorting is completed for the order container and the shelf is moved away, sending a third box-taking instruction to the box-taking mechanism to drive the box-taking mechanism to transfer the order container from the sorting position to the cache position; or, obtaining order information of the order container for which sorting is completed at each sorting position, determining an order similarity of order containers based on the order information of each order container for which sorting is completed, generating a fourth box-taking instruction based on the order similarity, and sending the fourth box-taking instruction to the box-taking mechanism to drive the box-taking mechanism to transfer order containers whose order similarity is higher than a preset threshold from the sorting position to the cache position.

If the shelf of the sorting station is moved away, the order container for which sorting is completed cannot be transferred from the sorting position in time, and the sorting position will be occupied by the order container for which sorting is completed, resulting in the inability to place a new order container, reducing the number of order containers for which sorting can be performed. Therefore, the cache position may be set on the sorting rack, so that in the case that the shelf is moved away, the order container for which sorting is completed may be transferred to the cache position on the sorting rack. For example, the cache position may be located above or below the sorting position, which is not limited in the embodiments of the present disclosure. In some examples, because users are accustomed to the situation that the order container is located below the sorting position during sorting, the cache position may be set above the sorting position.

For example, in the case where sorting is completed for the order container and the shelf has been moved away, the control end sends the third box-taking instruction to the box-taking mechanism, and the box-taking mechanism transfers the order container for which sorting is completed from the sorting position to the cache position according to the third box-taking instruction. Thus, when a new shelf arrives, the order container for which sorting is completed that is placed at the cache position for caching may be moved to the new shelf.

**In** some embodiments, the order container may include order information, and the order information may include order time, delivery destination, transportation mode, transportation condition, etc. The transportation mode may include air transportation, road transportation, rail transportation, ship transportation, etc.; the transportation condition may include normal temperature transportation, cold chain transportation, expedited transportation, etc. The control end reads the order information of each order container, and determines the order similarity of order containers according to the order information.

**In** some examples, the control end may compare the order information of each order container, determine whether orders of the order containers are similar, generate a fourth box-taking instruction based on the order similarity, and send the fourth box-taking instruction to the box-taking mechanism. The box-taking mechanism transfers the order containers whose order similarity is higher than the preset threshold from the sorting position to the cache position according to the fourth box-taking instruction.

For example, the order information of the order containers for which sorting has been completed at each sorting position obtained by the control end includes: order container 1 (delivery destination: Guangzhou, transportation mode: railway transportation, transportation condition: normal temperature transportation), order container 2 (delivery destination: Shenzhen, transportation mode: road transportation, transportation condition: cold chain transportation), order container 3 (delivery destination: Shenzhen, transportation mode: road transportation, transportation condition: cold chain transportation), order container 4 (delivery destination: Beijing, transportation mode: aircraft transportation, transportation condition: expedited transportation), order container 5 (delivery destination: Shenzhen, transportation mode: road transportation, transportation condition: cold chain transportation). The control end detects that the order containers with at least two of three identifiers including the delivery destination, the transportation mode and the transportation condition being the same in the above order information are order container 2, order container 3 and order container 5. Therefore, the control end generates the fourth box-taking instruction and sends the fourth box-taking instruction to the box-taking mechanism, in which the fourth box-taking instruction is used to drive the box-taking mechanism to transfer order container 2, order container 3 and order container 5 from the sorting position to the cache position.

By transferring the order containers whose order similarity is higher than the preset threshold from the sorting position to the cache position according to the order similarity, the order containers stored at the cache position have similar order information, so that the order information of the order containers for which sorting is completed that are subsequently transferred to the shelf is similar, thereby realizing the function of assisting sorting, and further improving a working efficiency of objects working at the target processing point position.

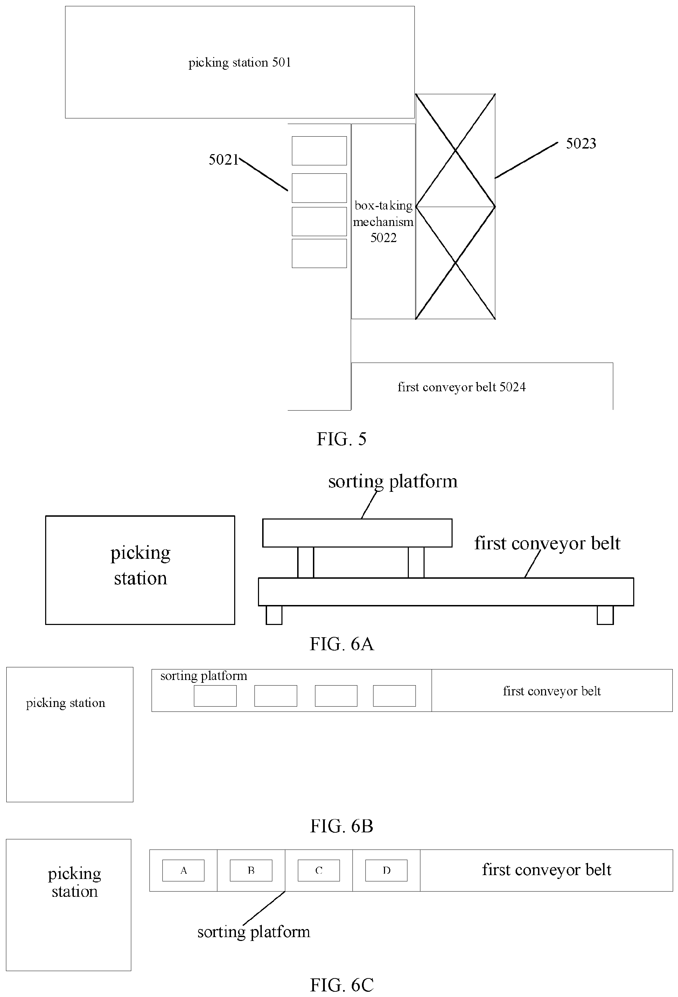

**In** some embodiments, in order to shorten a duration that the order container for which sorting is completed is stagnant in the sorting mechanism, a conveyor belt (such as first conveyor belt) may also be set to timely transport the order container for which sorting is completed to the target processing point position. FIG. 5 is a schematic diagram of a goods picking and sorting system with a sorting mechanism including a first conveyor belt provided by some embodiments of the present disclosure. As shown in FIG. 5, the goods picking and sorting system includes a picking station 501 and a sorting station. The sorting station includes a sorting mechanism. The sorting mechanism may include a sorting platform and a first conveyor belt 5024. The first conveyor belt 5024 is used as a transportation end and is always in a transportation enabled state during the goods picking and sorting. The first conveyor belt may automatically transport the order container placed thereon to the target processing point position.

In some embodiments, the sorting platform is provided with a plurality of sorting positions 5021. For example, a height of the sorting platform may be adjusted to a height that is convenient for the picking and sorting object to perform the sorting operation, the number of sorting positions 5021 may be set to 4, the first conveyor belt 5024 may be located above or below the sorting platform or on the same horizontal plane as the sorting platform, and the sorting platform may be a complete platform, a complete conveyor belt, or a platform composed of a small independent conveyor belt corresponding to each sorting position 5021.

For example, the control end may generate a transferring instruction and send the transferring instruction to the transferring object according to relative positions of the sorting platform and the first conveyor belt, so that the transferring object transfers the order container for which sorting is completed to the first conveyor belt. Since the picking and sorting object sorts the picked goods from the picking platform into the order container on the sorting platform, the height of the sorting platform may be automatically adjusted to a height that is convenient for the sorting object to sort according to different picking and sorting objects, thereby improving the efficiency of picking and sorting the goods. In addition, since a main function of the first conveyor belt is to transport the order container for which sorting is completed to the target processing point position, the height and the position of the first conveyor belt may be adjusted according to the height of the sorting platform. In some examples, the order container for which sorting is completed may also be called a target order container.

In some embodiments, the first conveyor belt is arranged below the sorting platform. When the control end identifies that there is an order container for which sorting is completed on the sorting platform, the transferring object may directly transfer the order container for which sorting is completed from the upper sorting platform to the lower first conveyor belt; or the target order container for which sorting is completed may be transferred from the upper sorting platform to the lower first conveyor belt through an automated device such as box-taking mechanism or robotic arm. By setting relative positions of the sorting platform and the first conveyor belt in an upper and lower layer arrangement, the space of the sorting station may be fully utilized, and the box-taking object may transfer the target order container by moving up and down, which reduces the difficulty of transferring the target order container, saves the time of waiting for completion of sorting for other order containers, and improves an efficiency of transferring the target order container.

**In** some embodiments, the relative positions of the sorting platform and the first conveyor belt are arranged in the same plane and adjacent to each other. In this scenario, the sorting platform has one first sorting position that is closest to the first conveyor belt, and several second sorting positions other than the first sorting position. When the control end identifies that there is an order container for which sorting is completed on the sorting platform, the order container on the sorting platform may be transferred to the first conveyor belt by the picking and sorting staff in the operating space, or by an automated device such as robotic arm or box-taking mechanism. When the sorting platform is a conveyor belt structure, the order container for which sorting is completed at the first sorting position may be directly transferred to the first conveyor belt through the conveyor belt, thereby saving the time of transferring by people or machines, and further improving the efficiency of transferring the target order container.

FIG. 6A shows a front view of the goods picking and sorting system in which the relative positions of the sorting platform and the first conveyor belt are set in an upper and lower layer arrangement. As shown in FIG. 6A, in order to improve the efficiency of transferring the target order container from the sorting platform to the first conveyor belt and realize automatic transferring of the target order container, the picking station in FIG. 6A is located on the left side in the front view of the goods picking and sorting system, and the relative positions of the sorting platform and the first conveyor belt are set in an upper and lower layer arrangement. Taking the transferring object as a box-changing mechanism as an example, sending the transferring instruction to the transferring object according to the relative positions of the sorting platform and the first conveyor belt may include: sending the transferring instruction to the box-changing mechanism to instruct the box-changing mechanism to transfer the target order container from the sorting platform to the first conveyor belt.

For example, the sorting platform may be a platform structure or a conveyor belt structure. When the sorting platform is a conveyor belt structure, each sorting position may be set as an independent conveyor belt structure. For example, each sorting position on the sorting platform corresponds to a small independent conveyor belt, and the conveyor belt of each sorting position may be controlled individually. For example, start, stop, transfer a preset number of sorting positions to the left, or transfer a preset number of sorting positions to the right. Usually, during the picking and sorting goods, the first conveyor belt is always in a working state to transfer the order container placed thereon to the target processing point position at a preset transportation speed.

In order to facilitate the picking and sorting object to sort the order container on the sorting platform, the height of the sorting platform may be automatically adjusted. When the picking and sorting object is a picking and sorting staff in the operating space of the goods picking and sorting system, the height of the sorting platform may be set to a height that is convenient for the picking and sorting staff to sort. In the case where relative positions of the sorting platform and the first conveyor belt are set in an upper and lower layer arrangement (two layers including an upper layer and a lower layer), the control end may send the transferring instruction to the box-changing mechanism, so that the box-changing mechanism automatically transfers the target order container to the first conveyor belt.

In some embodiments, in order to save power consumption of the first conveyor belt during picking and sorting of goods, a monitoring device (e.g., gravity monitoring device or infrared monitoring device) may be provided on the first conveyor belt. When the monitoring device detects that no order container is placed on the first conveyor belt, the first conveyor belt is in a slow transportation state or a stationary state; when the monitoring device detects that an order container is placed on the first conveyor belt, the control end sends a transporting instruction to the first conveyor belt according to a detection result of the monitoring device, to enable the first conveyor belt to transport the order container thereon at a normal transportation speed.

In the case that the relative positions of the sorting platform and the first conveyor belt are set in an upper and lower layer arrangement, by sending an instruction to the box-taking mechanism, the target order container for which soring is completed is transferred to the first conveyor belt and then to a target processing node, thereby realizing automatic transferring of the target order container, saving the robot's transportation capacity, avoiding a situation where the order container for which sorting is completed stagnates for too long in the sorting mechanism, which results in stagnation of a work process for picking and sorting, and thus improving an overall efficiency of picking and sorting.

FIG. 6B shows a top view of the goods picking and sorting system, in which the relative positions of the sorting platform and the first conveyor belt are arranged in the same plane and adjacent to each other, and the sorting platform is a conveyor belt structure. In order to make fuller use of the sorting platform, the sorting positions are more accurately controlled, thereby reducing an equipment cost of the goods sorting system and improving the efficiency of transferring the target order container. As shown in FIG. 6B, the picking station is located on the left side in the top view of the goods picking and sorting system, the relative positions of the sorting platform and the first conveyor belt are arranged in the same plane and adjacent to each other, and the sorting platform is a conveyor belt structure. Sending the transferring instruction to the transferring object according to the relative positions of the sorting platform and the first conveyor belt may include: sending the transferring instruction to the sorting platform to drive the sorting platform to transfer the target order container to the first conveyor belt through the conveyor belt structure.

For example, the relative positions of the sorting platform and the first conveyor belt are arranged in the same plane and adjacent to each other, and the sorting platform is a conveyor belt structure, which may be driven to transport the order container for which sorting is completed thereon directly to the first conveyor belt. Therefore, the control end may send the transferring instruction to the sorting platform to instruct the sorting platform to transport the target order container in a direction towards the first conveyor belt.

In some embodiments, if sorting is completed for the order container at the sorting position closest to the first conveyor belt first, the sorting platform may be directly driven to transport over a distance of one sorting position in the direction towards the first conveyor belt. There is no need to transfer the target order container by people or additional robotic arms or other devices, which greatly improves the efficiency of transferring the target order container.

In some examples, sending the transferring instruction to the sorting platform may include: in a case that the target order container is at a first sorting position, sending the transferring instruction to the sorting platform to instruct the sorting platform to directly transport the target order container to the first conveyor belt through the conveyor belt structure, in which the first sorting position is a sorting position closest to the first conveyor belt.

The sorting platform is usually in a transportation disabled state. The first sorting position is the sorting position closest to the first conveyor belt. When the sorting platform is driven to transport towards the first conveyor belt, the order container at the first sorting position may be directly transported to the first conveyor belt, which greatly improves the efficiency of transferring the target order container.

For example, the sorting platform may be preset to transport over the distance of one sorting position in the direction towards the first conveyor belt once receiving the transferring instruction. Each time the control end identifies that sorting is completed for one order container, the control end determines the order container as the target order container and identifies whether the target order container is located at the first sorting position. In the case that the target order container is located at the first sorting position, the transferring instruction is sent to the sorting platform to drive the sorting platform to transport the target order container over the distance of one sorting position in the direction towards the first conveyor belt through the conveyor belt structure. For example, the transferring instruction is pre-stored in the control end as an instruction for driving the sorting platform to rotate over a width of one sorting position at a time. In the case that the target order container is located at the first sorting position, the sorting platform is driven to rotate over the width of one sorting position by sending the transferring instruction to the sorting platform once, thereby achieving an accuracy of drive controlling of the sorting platform and improving the efficiency of transferring the target order container.

In some examples, a sensor (such as camera or infrared sensing device) is arranged near the sorting platform, and according to a signal received by the sensor, it is identified whether the target order container has been transported to the first conveyor belt, and if so, a transportation stopping instruction is sent to the sorting platform to stop the transportation of the sorting platform. For example, taking the sorting platform including 4 sorting positions as an example, based on a detection result of the sensor arranged near the sorting platform, controlling the sorting platform to start and stop the transportation may be implemented as follows. A time threshold is preset in the control end, for example, 15 seconds, if the control end identifies that sorting is completed for the order containers on 3 sorting positions closest to the first conveyor belt on the sorting platform, then the control end generates one transferring instruction and sends the transferring instruction to the sorting platform to instruct the sorting platform to transport all the 3 target order containers to the first conveyor belt. During the transportation of the sorting platform, the sensor located near the sorting platform receives the detection signal in real time, and after all the 3 target order containers are transported to the first conveyor belt, the detection result is fed back to the control end, the control end receives the detection result, generates a transportation stopping instruction and sends the transportation stopping instruction to the sorting platform to stop the transportation of the sorting platform.

After the target order container on the sorting platform is transported to the first conveyor belt, the order container on the sorting platform that was originally far away from the first conveyor belt will be transported to a position close to the first conveyor belt, thereby leaving a sorting position far away from the first conveyor belt vacant. Usually, the order container for which sorting is not completed on the sorting platform is sorted faster than the to-be-sorted order container that is transferred later, that is, the order container for which sorting is not completed on the sorting platform is more likely to be located at the first sorting position when sorting is completed. Therefore, the control end may prompt the box-taking object to transfer the to-be-sorted order container directly to the vacant sorting position far away from the first conveyor belt, thereby improving the efficiency of transferring the target order container.

By setting the sorting platform as the conveyor belt structure, in the case that the target order container is located at the first sorting position, the transferring instruction is sent to the sorting platform to drive the sorting platform to directly transport the target order container to the first conveyor belt through the conveyor belt structure, thereby achieving efficient and automatic transferring of the target order container, meanwhile avoiding a situation where the order container for which sorting is completed stagnates for too long in the sorting mechanism, which results in stagnation of the work process for picking and sorting, thereby improving the overall efficiency of picking and sorting.

In actual applications, there may be a situation where the order container for which sorting is completed first is not located at the first sorting position. In order to further improve the efficiency of transferring the target order container, FIG. 6C shows a top view of the goods picking and sorting system, in which the relative positions of the sorting platform and the first conveyor belt are arranged in the same plane and adjacent to each other, and each sorting position is set as an independent conveyor belt structure. As shown in FIG. 6C, the picking station is located on the left side in the top view of the goods picking and sorting system, and each sorting position on the sorting platform (as shown in FIG. 6C, sorting position A, sorting position B, sorting position C and sorting position D) is set as an independent conveyor belt structure, and the relative positions of the sorting platform and the first conveyor belt are arranged in the same plane and adjacent to each other. Sending the transferring instructions to the sorting platform may also include: in a case that the order container is at a second sorting position, sending a sixth box-taking instruction to the box-taking mechanism to drive the box-taking mechanism to take out the target order container from the second sorting position, in which the second sorting position is any sorting position other than the first sorting position, and the first sorting position is the sorting position closest to the first conveyor belt; sending a first transferring instruction to the first sorting position and a third sorting position to drive the first sorting position and the third sorting position to transport the carried order containers in a direction towards the second sorting position through the conveyor belt structure, in which the third sorting position is a sorting position between the first sorting position and the second sorting position; sending a box-placing instruction to the box-taking mechanism to drive the box-taking mechanism to place the target order container at the first sorting position; sending a second transferring instruction to the first sorting position to drive the first sorting position to transport the target order container to the first conveyor belt through the conveyor belt structure.

For example, the first sorting position is the sorting position closest to the first conveyor belt, the second sorting position is any sorting position other than the first sorting position, and the third sorting position is the sorting position between the first sorting position and the second sorting position. When the target order container is located at the second sorting position, since sorting have not been completed for the order containers at the first sorting position and the third sorting position between the first sorting position and the second sorting position, it is impossible to drive the sorting platform to directly transport the order container at the second sorting position to the first conveyor belt. In this case, if the sorting platform is a conveyor belt structure of a platform structure, the control end may send a box-taking instruction to the box-taking mechanism in the case of identifying that sorting is completed for the order container at the second sorting position, so as to drive the box-taking mechanism to take out the target order container at the second sorting position from the sorting platform, and directly transfer the target order container to the first conveyor belt. The control end may further directly send a prompt instruction to the picking and sorting object, such as a voice prompt or displaying a text prompt on a display screen of the control end, to prompt the picking and sorting object to take out the target order container at the second sorting position from the sorting platform, and directly transfer the target order container to the first conveyor belt.

In order to further improve the efficiency of transferring the target order container and realize the automatic transferring of the target order container, in the case that the relative positions of the sorting platform and the first conveyor belt are arranged in the same plane and adjacent to each other, each sorting position on the sorting platform may be set as an independent conveyor belt structure, that is, each sorting position corresponds to an independent conveyor belt, which may independently receive the instruction sent by the control end and perform transportation.

In the case that the control end identifies that the order container is located at the second sorting position, the control end sends the sixth box-taking instruction to the box-taking mechanism to drive the box-taking mechanism to take out the order container from the second sorting position, in this case, the second sorting position is in a vacant state in which no order container is placed. The control end may send the first transferring instruction to the first sorting position and the third sorting position to drive the first sorting position and the third sorting position to transport the carried order containers in the direction towards the second sorting position through the conveyor belt structure, so that the order containers at the first sorting position and the third sorting position move a distance of one sorting position in the direction towards the second sorting position, and the first sorting position is in the vacant state again in which no order container is placed. In this case, the box-placing instruction is sent to the box-taking mechanism to drive the box-taking mechanism to place the target order container to the first sorting position. That is to say, when the box-taking mechanism receives the sixth box-taking instruction, the box-taking mechanism takes out the target order container, and when the first sorting position is in the vacant state again, the box-taking mechanism places the target order container to the first sorting position, so the target order container for which sorting is completed is placed at the first sorting position, and the control end may send the second transferring instruction to the first sorting position to drive the first sorting position to directly transport the target order container to the first conveyor belt through the conveyor belt structure. After the target order container is transported to the first conveyor belt, the first sorting position will be back to the vacant state again. In general, the order container currently located on the sorting platform is already in the state of undergoing the sorting task, so it is easier to first complete sorting for the order container currently located on the sorting platform than the to-be-sorted order container that has not yet been transferred to the sorting platform. Therefore, in this case, the control end may drive all other sorting positions except the first sorting position to transport the order containers in the direction towards the first sorting position through the conveyor belt structure, so that the sorting position farthest from the first conveyor belt is in the vacant state, and a new to-be-sorted order container may be transferred to the sorting position farthest from the first conveyor belt and start undergoing the sorting task.

In the case that the relative positions of the sorting platform and the first conveyor belt are arranged in the same plane and adjacent to each other, each sorting position is set as an independent conveyor belt structure, and when the target order container is located at the second sorting position, the target order container at the second sorting position is taken out by the box-taking mechanism, so that the first sorting position and the third sorting position may transport the order container in the direction towards the second sorting position through the conveyor belt structure, and the first sorting position is vacated. In this way, the target order container can be placed at the first sorting position and directly transported from the first sorting position to the first conveyor belt through the conveyor belt structure, which improves the efficiency of transferring the target order container. Further, the order container for which sorting is completed is directly transported to the target processing point position by the first conveyor belt, thereby saving the robot's transportation capacity, avoiding a situation where the order container for which sorting is completed stagnates in the sorting mechanism for too long, which results in stagnation of the work process for picking and sorting, and thus improving the overall efficiency of picking and sorting.

In some embodiments, after sending the transporting instruction to the box-taking mechanism to drive the box-taking mechanism to transport the order container for which sorting is completed to the first conveyor belt, the method may further include: identifying whether there are remaining order containers on the shelf; if so, sending a fifth box-taking instruction to the box-taking mechanism to drive the box-taking mechanism to transfer a new order container from the shelf to the sorting mechanism.

For example, the control end may send a remaining order container detecting instruction to the sorting station. After receiving the instruction, the sorting station detects whether there are remaining order containers on the shelf and sends a detection result to the control end. The sorting station detects whether there are remaining order containers on the shelf. If it is detected that there are remaining order containers on the shelf, the sorting station sends remaining order container prompt information to the control end.

If it is identified that there are remaining order containers on the shelf, it means that there are to-be-sorted order containers on the shelf. Since the order containers for which sorting is completed on the sorting mechanism have been transported away by the first conveyor belt, there are vacant sorting positions on the sorting mechanism. In this case, new order containers (such as to-be-sorted order containers) may be transferred from the shelf to the sorting mechanism. For example, the control end may send a fifth box-taking instruction to the box-taking mechanism, and the fifth box-taking instruction is used to drive the box-taking mechanism to transfer the new order containers from the shelf to the sorting mechanism.

By transferring the remaining order containers on the shelf to the sorting positions in the sorting mechanism, the sorting mechanism is automatically replenished with order containers, which saves the time of waiting for new order containers to arrive at the sorting positions during the sorting and improves the sorting efficiency.

In some embodiments, after identifying whether there are remaining order containers on the shelf, the method further includes: if there is no remaining order container on the shelf, sending a transporting instruction to the shelf transporting device to schedule the shelf transporting device to transport the shelf away and transport a spare shelf to a shelf target placement position. The spare shelf has new order containers stored thereon, and the shelf target placement position is a placement position of the shelf at the sorting station.

If there is no more order container left on the shelf, it means that the shelf can no longer provide any to-be-sorted order container, for example, all the containers on the shelf are containers for which sorting is completed or the shelf is an empty shelf. In this case, the shelf may be moved away from the sorting station and a new shelf may be scheduled. For example, a transporting instruction may be sent to the shelf transporting device used to transport the shelf. The transporting instruction is used to schedule the shelf transporting device to transport the shelf away and transport the spare shelf to the shelf target placement position. The spare shelf is used to store new order containers, and the target placement position is used to place the spare shelf. In some examples, the shelf transporting device that moves the shelf away and the shelf transporting device that transports the spare shelf may be the same transporting device or different transporting devices, which is not limited in the embodiments of the present disclosure.

By moving the shelf without remaining order containers away from the sorting station and transporting the spare shelf to the target placement position on the sorting station, it may ensure that new order containers are replenished to the sorting station in a timely manner, thus saving waiting time during the sorting and improving the sorting efficiency.

With the goods picking and sorting method provided by the embodiment of the present disclosure, by setting the picking station and the sorting station to share the operating space, and identifying by the control end the picking station and sending the picking and sorting prompt instruction to the picking and sorting object based on an identification result, the picking and sorting object may complete the picking and sorting of goods in place without moving too far, thereby saving the overall operation time of picking and sorting, realizing integration of picking and sorting, and improving an overall efficiency of picking and sorting.

For ease of understanding, the goods picking and sorting method provided by the embodiments of the present disclosure is described below in combination with the system structures shown in FIG. 4 and FIG. 5.

In the goods picking and sorting system shown in FIG. 4, a deliverable sorting rack 4021 is arranged around an original goods-to-person workstation, a box-taking mechanism 4022 is arranged at the rear of the sorting rack 4021, a shelf docking position is provided at the rear of the box-taking mechanism 4022, and the shelf 4023 is provided with to-be-sorted order containers and filled order containers (such as order containers for which sorting is completed).

In the initial state, to-be-sorted order containers are placed on the shelf 4023; after a picking robot enters a queue position, it arranges the order containers in a box-taking sequence according to a grabbing sequence of hitting the to-be-picked containers; the corresponding order containers are transferred to the front sorting rack 4021 in advance, and the order containers are arranged in sequence on the sorting rack 4021; after the picking robot arrives at the picking station 401 and puts down the to-be-picked container, a picking and sorting staff sorts the corresponding goods into the order container on the sorting rack 4021, and after sorting is completed, it is selected whether to replace a new order container according to the sequence of order containers; after the goods in an order container are sorted, the box-taking mechanism 4022 puts the full order container on the shelf and replaces a to-be-sorted order container to the sorting rack 4021; when sorting is completed for all the to-be-sorted order containers on the first shelf, and all the order containers on the shelf 4023 are full (also called fully sorted order containers), the shelf transporting device transports the shelf with all full order containers to a next link, and schedules a new shelf with to-be-sorted order containers as a spare shelf for sorting.

**In** the goods picking and sorting system shown in FIG. 5 , a deliverable sorting position 5021 is arranged around an original goods-to-person workstation, a first conveyor belt 5024 (also referred to as filled container conveyor belt) is provided below the sorting position 5021, a box-taking mechanism 5022 is provided at the rear of the sorting position 5021, a shelf docking position is provided at the rear of the box-taking mechanism 5022, and to-be-sorted order containers and filled order containers are placed on the shelf 5023.

**In** the initial state, to-be-sorted order containers are placed on the shelf 5023; after a picking robot enters a queue position, it arranges the order containers in a box-taking sequence according to a grabbing sequence of hitting the to-be-picked containers; the corresponding order containers are transferred to the front sorting rack 5021 in advance, and the order containers are arranged in sequence on the sorting rack 5021; after the picking robot arrives at the picking station 501 and puts down the to-be-picked container, a picking and sorting staff sorts the corresponding goods into the order container at the sorting position, and after sorting is completed, it is selected whether to replace a new order container according to the sequence of order containers; after the goods in an order container are sorted, the box-taking mechanism 5022 puts the full order container on the first conveyor belt 5024 and replaces a to-be-sorted order container to the sorting position 5021; when sorting is completed for all the to-be-sorted order containers on the first shelf, the shelf transporting device moves the shelf away, and schedules a new shelf with to-be-sorted order containers as a spare shelf.

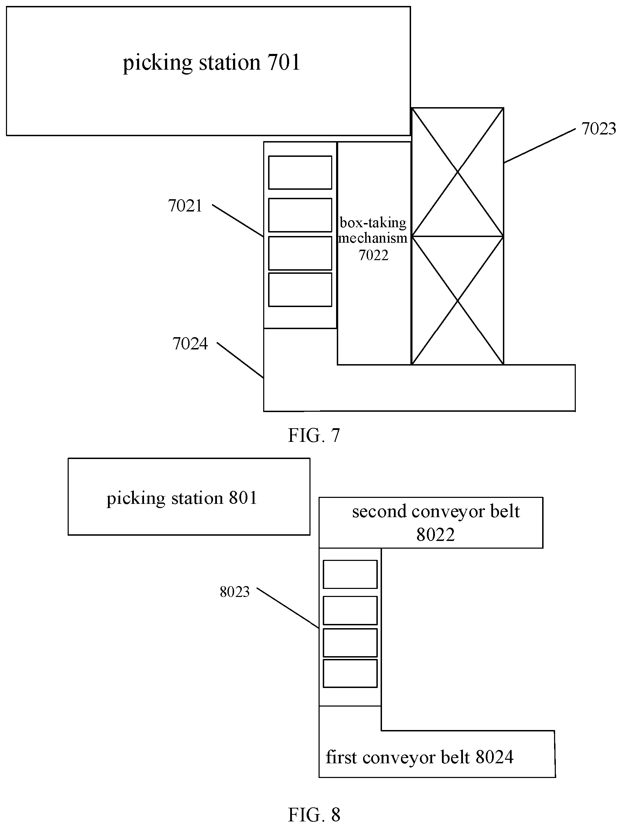

FIG. 7 is a top view of the goods picking and sorting system with a shelf used as the transporting mechanism according to some embodiments of the present disclosure. FIG. 8 is a top view of the goods picking and sorting system with a second conveyor belt used as the transporting mechanism according to some embodiments of the present disclosure. For ease of understanding, the goods picking and sorting method provided by the embodiments of the present disclosure is described below in combination with the system structures shown in FIG. 7 and FIG. 8.

In the solution of transporting to-be-sorted order containers using shelves shown in FIG. 7, a deliverable sorting platform 7021 is arranged around an original goods-to-person workstation (i.e., picking station 701), a box-taking mechanism 7022 is arranged at the rear of the sorting platform 7021, a shelf docking position is arranged at the rear of the box-taking mechanism 7022, and to-be-sorted order containers may be carried on the shelf 7023. A first conveyor belt 7024 may be arranged above or below the sorting platform, or may be arranged at a position in the same plane as the sorting platform and adjacent to the sorting platform, and the first conveyor belt 7024 is used to directly transport the order containers for which sorting is completed to the target processing point position.

In the initial state, to-be-sorted order containers are placed on the shelf 7023; after a picking robot enters a queue position, it arranges the order containers in a box-taking sequence according to a grabbing sequence of hitting the to-be-picked containers; the corresponding order containers are transferred to the front sorting platform 7021 in advance, and the order containers are arranged in sequence on the sorting platform 7021; after the picking robot arrives at the picking station 701 and puts down the to-be-picked container, a picking and sorting staff sorts the corresponding goods into the order container on the sorting platform 7021, and after sorting is completed, it is selected whether to replace a new order container according to the sequence of order containers; after the goods in an order container are sorted, the box-taking mechanism 7022 transfers the full order container to the first conveyor belt 7024 and replaces a to-be-sorted order container to the sorting platform 7021; when all the to-be-sorted order containers on the first shelf are completely used up and the shelf has no order container at all, the shelf transporting device transports the empty shelf back to the warehouse to wait for reusage, and schedules a new shelf with to-be-sorted order containers as a spare shelf for sorting.

It is explained here that the top view of the goods picking and sorting system with the shelf used as the transporting mechanism shown in FIG. 7 is only one example of the goods picking and sorting system with the shelf used as the transporting mechanism, which is not used to limit the combination way of the sorting platform and the first conveyor belt in the goods picking and sorting system to be protected the present disclosure.

In the sorting rack solution shown in FIG. 8, a deliverable sorting platform 8023 and a second conveyor belt 8022 are arranged around an original workstation (i.e., picking station 801). The second conveyor belt 8022 is used to transport the to-be-sorted order container to a designated position adjacent to the sorting platform 8023 in the sorting station, and a box-taking object may directly transfer the to-be-sorted order container from the designated position to the sorting platform 8023. A first conveyor belt 8024 may be provided above or below the sorting platform, or may be provided at a position in the same plane as the sorting platform 8023 and adjacent to the sorting platform 8023, and the first conveyor belt 8024 is used to directly transport the order container for which sorting is completed to the target processing point position.

It is explained here that the top view of the goods picking and sorting system with the second conveyor belt used as the transporting mechanism shown in FIG. 8 is only one example of the goods picking and sorting system with the second conveyor belt used as the transporting mechanism. In the goods picking and sorting system to be protected by the present disclosure, the positions of the first conveyor belt 8024 and the second conveyor belt 8022 may be interchanged, and a transportation direction of the conveyor belt for transporting to-be-sorted order containers and a transportation direction of the conveyor belt for transporting order containers for which sorting is completed are not limited.

**In** some embodiments, the sorting mechanism in the goods picking and sorting system may further include a cache rack. In the case that the sorting mechanism includes the cache rack, the to-be-sorted order containers may be placed on the cache rack. For example, the shelf transporting device transports the shelf on which the to-be-sorted order containers are placed to the sorting station in advance, and the box-taking device or box-taking staff located at the sorting station transfers the to-be-sorted order containers on the shelf to the cache rack. In the initial state, all the order containers placed on the cache rack are to-be-sorted order containers. After sorting is completed a to-be-sorted order container, the transferring object may transfer the order container for which sorting is completed to the vacant goods position on the cache rack, or transfer the order container for which sorting is completed to the first conveyor belt. When all the containers placed on the cache rack are order containers for which sorting is completed, the shelf transporting device may transport the empty shelf or the shelf with the vacant placement position to the sorting station, and transfer the order containers on the cache rack to the shelf, and the shelf transporting device may transport the shelf to the target processing point position.

It should be noted that the above-mentioned embodiments provided by the present disclosure may be combined with each other. For example, the transporting mechanism may be any one of the shelf, the second conveyor belt or the cache rack, the transportation end may be any one of the shelf, the first conveyor belt and the cache rack, and the sorting structure may be the sorting platform or the sorting rack. Different structural types of the above-mentioned transporting mechanisms, transportation ends and sorting mechanisms may be combined together to form a variety of different goods picking and sorting systems. For example, taking the case where the transporting mechanism in the goods picking and sorting system is the second conveyor belt and the transportation end is the shelf as an example, the box-taking object may transfer the to-be-sorted order container from the second conveyor belt to the sorting mechanism, and when sorting is completed for the order container, the transferring object (such as box-taking mechanism) transfers the order container for which sorting is completed from the sorting mechanism to the shelf. The embodiments of the present disclosure will not introduce other types of goods picking and sorting systems one by one, and reference may be made to the relevant descriptions in the above embodiments.

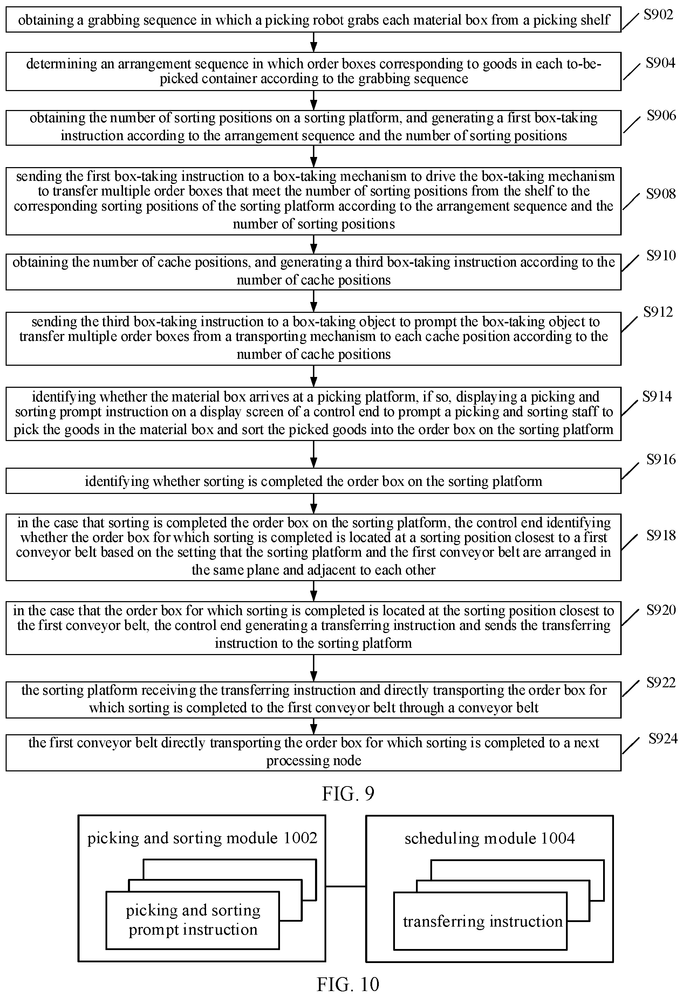

FIG. 9 is a flowchart of a goods picking and sorting method applied to a workstation according to some embodiments of the present disclosure. The goods picking and sorting method will be further described below in conjunction with FIG. 9.

At step S902, a grabbing sequence in which a picking robot grabs each material box from a picking shelf is obtained.

For example, the material box is a container used in a workstation to place to-be-picked goods.

At step S904, an arrangement sequence in which order boxes corresponding to goods in each to-be-picked container is determined according to the grabbing sequence.

For example, the order box is a container used in the workstation to place goods corresponding to an order.

At step S906, the number of sorting positions on a sorting platform is obtained, and a first box-taking instruction is generated according to the arrangement sequence and the number of sorting positions.

At step S908, the first box-taking instruction is sent to a box-taking mechanism to drive the box-taking mechanism to transfer multiple order boxes that meet the number of sorting positions from the shelf to the corresponding sorting positions of the sorting platform according to the arrangement sequence and the number of sorting positions.

**At** step S901, the number of cache positions is obtained, and a third box-taking instruction is generated according to the number of cache positions.

**At** step S912, the third box-taking instruction is sent to a box-taking object to prompt the box-taking object to transfer multiple order boxes from a transporting mechanism to each cache position according to the number of cache positions.

At step S914, it is identified whether the material box arrives at a picking platform. If so, a picking and sorting prompt instruction is displayed on a display screen of a control end to prompt a picking and sorting staff to pick the goods in the material box and sort the picked goods into the order box on the sorting platform.

**At** step S916, it is identified whether sorting is completed the order box on the sorting platform.

**At** step S918, in the case that sorting is completed the order box on the sorting platform, the control end identifies whether the order box for which sorting is completed is located at a sorting position closest to a first conveyor belt based on the setting that the sorting platform and the first conveyor belt are arranged in the same plane and adjacent to each other.

At step S920, in the case that the order box for which sorting is completed is located at the sorting position closest to the first conveyor belt, the control end generates a transferring instruction and sends the transferring instruction to the sorting platform.

At step S922, the sorting platform receives the transferring instruction and directly transports the order box for which sorting is completed to the first conveyor belt through a conveyor belt.

At step S924, the first conveyor belt directly transports the order box for which sorting is completed to a next processing node.

A schematic solution of the goods picking and sorting method applied to a goods-to-person workstation according to the embodiments is described above. It should be noted that the technical solution of the goods picking and sorting method applied to the goods-to-person workstation and the technical solution of the above-mentioned goods picking and sorting method belong to the same concept. For details not described in detail in the technical solution of the goods picking and sorting method applied to the goods-to-person workstation, reference may be made to the description of the technical solution of the above-mentioned goods picking and sorting method.

To summarize, with the goods picking and sorting method provided by the present invention, the picking and sorting prompt instruction is sent to the picking and sorting object in the operating space in the case that the to-be-picked container arrives at the picking station, so as to prompt the picking and sorting object to pick the goods in the to-be-picked container, and sort the picked goods into the order container pre-placed on the sorting platform; in the case sorting is completed for the target order container, the transferring instruction is sent to the transferring object according to the relative positions of the sorting platform and the first conveyor belt, so as to prompt the transferring object to transfer the target order container from the sorting platform to the first conveyor belt, and the first conveyor belt is used to transport the target order container to the target processing point position. By setting the picking station and the sorting station to share the operating space, and identifying by the control end the picking station and sending the picking and sorting prompt instruction to the picking and sorting object based on the identification result, the picking and sorting object may complete the picking and sorting of the goods on the spot without moving too far, so that the overall operation time of picking and sorting is saved, and the integration of picking and sorting may be realized; in addition, by transferring the order container for which sorting is completed to the first conveyor belt, the order container may be quickly transported to the target processing point position by the first conveyor belt after sorting is completed, without waiting for completion of sorting of other order containers and without scheduling the transporting robot for transportation, which improves the transportation efficiency of the order container for which sorting is completed, releases the robot's transportation capacity, thereby improving the overall efficiency of picking and sorting.

Corresponding to the above-mentioned method embodiments, the embodiments of the present disclosure further provide a goods picking and sorting apparatus. FIG. 10 is a block diagram of a goods picking and sorting apparatus provided by some embodiments of the present disclosure. As shown in FIG. 10, the apparatus is applied to a goods picking and sorting system. The goods picking and sorting system includes a picking station, a sorting station and a control end. The picking station shares an operating space with the sorting station. The sorting station includes a sorting mechanism. The goods picking and sorting apparatus includes: a picking and sorting module 1002 and a scheduling module 1004.

The picking and sorting module 1002 is configured to identify whether there is a to-be-picked container arriving at the picking station; and when a to-be-picked container arrives at the picking station, send a picking and sorting prompt instruction to a picking and sorting object in the operating space to prompt the picking and sorting object to pick goods in the to-be-picked container, and sort the picked goods into an order container placed on the sorting mechanism.

The scheduling module 1004 is configured to identify whether sorting is completed for the order container; and when sorting is completed for the order container, send a transferring instruction to a transferring object to instruct the transferring object to transfer the order container for which sorting is completed from the sorting mechanism to the shelf, or to instruct the transferring object to transfer the order container for which sorting is completed from the sorting mechanism to a first conveyor belt, in which the first conveyor belt is used to transport the order container for which sorting is completed to a target processing point position.

In some embodiments, the sorting station also includes a box-taking object and a transporting mechanism, and the transporting mechanism is used to transport a to-be-sorted order container to the sorting station; the picking and sorting module 1002 is further configured to send a box-taking instruction to the box-taking object to prompt the box-taking object to transfer the to-be-sorted order container from the transporting mechanism to the sorting mechanism.

In some embodiments, the picking and sorting module 1002 includes:
a first obtaining module, configured to obtain a grabbing sequence in which a picking robot grabs each to-be-picked container from the picking shelf;
a sequencing module, configured to determine an arrangement sequence of order containers corresponding to goods in each to-be-picked container according to the grabbing sequence;
**a** first instruction generating module, configured to generate a first box-taking instruction according to the arrangement sequence; and
a first sending module, configured to send the first box-taking instruction to the box-taking mechanism to drive the box-taking mechanism to transfer multiple order containers from the shelf to corresponding sorting positions of the sorting mechanism according to the arrangement sequence.

In some embodiments, the first instruction generating module is further configured to obtain a number of sorting positions of the sorting mechanism, and generate the first box-taking instruction according to the arrangement sequence and the number of sorting positions. The first sending module is further configured to send the first box-taking instruction to the box-taking mechanism to drive the box-taking mechanism to transfer multiple order containers that meet the number of sorting positions from the shelf to the corresponding sorting positions of the sorting mechanism according to the arrangement sequence and the number of sorting positions.

In some embodiments, the transporting mechanism includes a second conveyor belt; the picking and sorting module 1002 is further configured to: generate a box-taking instruction in a case of detecting that the second conveyor belt transports the to-be-sorted order container to a designated location; send the box-taking instruction to the box-taking object to prompt the box-taking object to transfer the to-be-sorted order container from the designated location to the sorting mechanism.

In some embodiments, the transporting mechanism includes a cache rack, which is used to place to-be-sorted order containers and/or order containers for which sorting is completed; the picking and sorting module 1002 is further configured to: send the box-taking instruction to the box-taking object to prompt the box-taking object to transfer the to-be-sorted order container from the cache rack to the sorting mechanism.

In some embodiments, the scheduling module 1004 is further configured to obtain a remaining space in the order container every time one piece of picked goods is sorted, and determine that sorting is completed for the order container in a case that the remaining space reaches a preset space; or, determine each target goods corresponding to the order container, and determine that sorting is completed for the order container in a case that each target goods is sorted into the order container.

In some embodiments, the sorting mechanism is a sorting rack, and the transferring object is a box-taking mechanism; the scheduling module 1004 is further configured to send the transferring instruction to the box-taking mechanism to drive the box-taking mechanism to transfer the order container for which sorting is completed from the sorting mechanism to the shelf; identify whether all order containers on the shelf are order containers for which sorting is completed; if so, send a transporting instruction to a shelf transporting device to schedule the shelf transporting device to transport the shelf to the target processing point position.

In some embodiments, the goods picking and sorting apparatus may further include: a second sending module, configured to send a second box-taking instruction to the box-taking mechanism if order containers on the shelf include an order container for which sorting is not completed, so as to drive the box-taking mechanism to transfer the order container for which sorting is not completed from the shelf to the sorting mechanism.

In some embodiments, the sorting rack includes a sorting position and a cache position; the goods picking and sorting apparatus may also include: a cache driving module, configured to send a third box-taking instruction to the box-taking mechanism in a case that sorting is completed for an order container and the shelf is moved away, so as to drive the box-taking mechanism to transfer the order container from the sorting position to the cache position; or, obtain order information of the order container for which sorting is completed at each sorting position, determine an order similarity of order containers according to the order information of each order container for which sorting is completed, generate a fourth box-taking instruction according to the order similarity, and send the fourth box-taking instruction to the box-taking mechanism to drive the box-taking mechanism to transfer order containers whose order similarity is higher than a preset threshold from the sorting position to the cache position.

In some embodiments, the goods picking and sorting apparatus may further include: an identifying module configured to identify whether there are remaining order containers on the shelf; a third sending module configured to send a fifth box-taking instruction to the box-taking mechanism if there are remaining order containers on the shelf (such as to-be-sorted order containers exist on the shelf), so as to drive the box-taking mechanism to transfer a new order container from the shelf to the sorting mechanism.

In some embodiments, the goods picking and sorting apparatus may further include: a fourth sending module, configured to send a transporting instruction to the shelf transporting device if there is no remaining order container on the shelf (such as there is no to-be-sorted order container on the shelf), so as to schedule the shelf transporting device to move the shelf away and transport a spare shelf to a shelf target placement position, in which new order containers are stored on the spare shelf, and the shelf target placement position is a placement position of the shelf at the sorting station.

In some embodiments, the sorting mechanism includes a sorting platform and a first conveyor belt, and the scheduling module 604 is further configured to send the transferring instruction to the transferring object according to relative positions of the sorting platform and the first conveyor belt, so as to instruct the transferring object to transfer the order container for which sorting is completed from the sorting platform to the first conveyor belt.

**In** some embodiments, relative positions of the sorting platform and the first conveyor belt are arranged in an upper and lower layer arrangement; accordingly, the transferring object is a box-changing mechanism; accordingly, the scheduling module 1004 is further configured to send the transferring instruction to the box-changing mechanism to drive the box-changing mechanism to transfer the order container for which sorting is completed from the sorting platform to the first conveyor belt.

In some embodiments, the relative positions of the sorting platform and the first conveyor belt are arranged in the same plane and adjacent to each other; the sorting platform is a conveyor belt structure; accordingly, the scheduling module 1004 is further configured to send the transferring instruction to the sorting platform to drive the sorting platform to transfer the order container for which sorting is completed to the first conveyor belt through the conveyor belt structure.

In some embodiments, the goods picking and sorting apparatus may further include: the scheduling module 1004, further configured to send the transferring instruction to the sorting platform in a case that the order container is at a first sorting position, so as to drive the sorting platform to directly transport the order container for which sorting is completed to the first conveyor belt through the conveyor belt structure, in which the first sorting position is a sorting position closest to the first conveyor belt.

**In** some embodiments, each sorting position is configured as an independent conveyor belt structure, and the scheduling module 1004 is further configured to: in a case that the order container is at a second sorting position, send a sixth box-taking instruction to the box-taking mechanism to drive the box-taking mechanism to take out the order container for which sorting is completed from the second sorting position, in which the second sorting position is any sorting position other than a first sorting position, and the first sorting position is a sorting position closest to the first conveyor belt; send a first transferring instruction to the first sorting position and the third sorting position to drive the first sorting position and the third sorting position to transfer carried order containers in a direction towards the second sorting position through the conveyor belt structure, in which the third sorting position is a sorting position between the first sorting position and the second sorting position; send a box-placing instruction to the box-taking mechanism to drive the box-taking mechanism to place the order container for which sorting is completed at the first sorting position; send a second transferring instruction to the first sorting position to drive the first sorting position to transfer the order container for which sorting is completed to the first conveyor belt through the conveyor belt structure.

**In** some embodiments, the sorting station further includes a cache rack, and the transferring object is a box-taking mechanism; the scheduling module 1004 is further configured to send a transferring instruction to the box-taking mechanism to drive the box-taking mechanism to transfer the order container for which sorting is completed from the sorting mechanism to the cache rack; and determine whether all the order containers on the cache rack are order containers for which sorting is completed.

For example, the scheduling module 1004 is configured to: in a case that all the order containers on the cache rack are order containers for which sorting is completed, send a scheduling instruction to the shelf transporting device to schedule the shelf transporting device to transport the shelf with a vacant placement position to the sorting station; send the transferring instruction to the box-taking mechanism to drive the box-taking mechanism to transfer the order container for which sorting is completed from the cache rack to the shelf with the vacant placement position; send the transporting instruction to the shelf transporting device to schedule the shelf transporting device to transport the shelf with the order containers to the target processing point position.

For example, the scheduling module 1004 is further configured to: in a case that order containers on the cache rack include an order container for which sorting is not completed, send a seventh box-taking instruction to the box-taking mechanism to drive the box-taking mechanism to transfer the order container for which sorting is not completed from the cache rack to the sorting mechanism.

In some embodiments, the sorting mechanism includes cache positions; accordingly, the goods picking and sorting apparatus may further include: a second obtaining module, configured to obtain the number of cache positions of the sorting mechanism; a second instruction generating module, configured to generate an eighth box-taking instruction according to the number of cache positions; a fifth sending module, configured to send the eighth box-taking instruction to the box-taking mechanism to drive the box-taking mechanism to transfer multiple order containers that meet the number of cache positions from the shelf to respective cache positions according to the number of cache positions.

According to the embodiments of the present disclosure, by setting the picking station and the sorting station to share the operating space, and identifying by the control end the picking station and sending the picking and sorting prompt instruction to the picking and sorting object based on the identification result, the picking and sorting object may complete the picking and sorting of goods on the spot without moving too far, thereby saving the overall operation time of picking and sorting, realizing integration of picking and sorting, and improving an overall efficiency of picking and sorting.

A schematic solution of the goods picking and sorting apparatus according to the embodiment is described above. It should be noted that the technical solution of the goods picking and sorting apparatus and the technical solution of the goods picking and sorting method described above belong to the same concept. For details not described in detail in the technical solution of the goods picking and sorting apparatus, reference may be made to the description of the technical solution of the goods picking and sorting method described above.

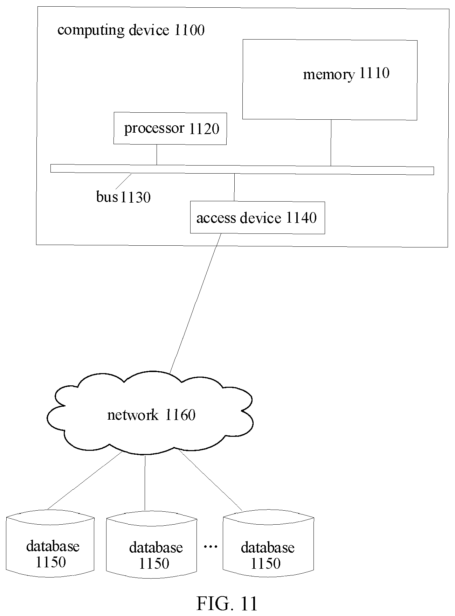

FIG. 11 is a block diagram of a computing device 1100 provided according to some embodiments of the present disclosure. The computing device 1100 includes a memory 1110 and a processor 1120. The processor 1120 is connected to the memory 1110 via a bus 1130, and a database 1150 is used to store data.

The computing device 1100 further includes an access device 1140 that enables the computing device 1100 to communicate via one or more networks 1160. Examples of these networks include a public switched telephone network (PSTN), a local area network (LAN), a wide area network (WAN), a personal area network (PAN), or a combination of communication networks such as the Internet. The access device 1140 may include one or more of any type of wired or wireless network interfaces (e.g., a network interface controller (NIC)), such as an IEEE 802.12 wireless local area network (WLAN) wireless interface, a world interoperability for microwave access (Wi-MAX) interface, an Ethernet interface, a universal serial bus (USB) interface, a cellular network interface, a Bluetooth interface, a near field communication (NFC) interface, and the like.

In some embodiments, the above components of the computing device 1100 and other components not shown in FIG. 11 may also be connected to each other, for example, via the bus. It should be understood that the block diagram of the computing device shown in FIG. 11 is only for illustrative purposes and is not intended to limit the scope of the present disclosure. Those skilled in the art may add or replace other components as needed.

The computing device 1100 may be any type of stationary or mobile computing devices, including a mobile computer or mobile computing device (e.g., tablet computer, personal digital assistant, laptop computer, notebook computer, netbook, etc.), a mobile phone (e.g., smart phone), a wearable computing device (e.g., smart watch, smart glasses, etc.), or other types of mobile devices, or a stationary computing device such as a desktop computer or PC. The computing device 1100 may also be a mobile or stationary server.

The processor 1120 is used to execute the following computer-executable instructions: in a case that a to-be-picked container arrives at a picking station, sending a picking and sorting prompt instruction to a picking and sorting object in an operating space to prompt the picking and sorting object to pick goods in the to-be-picked container, and to sort the picked goods into an order container placed on a sorting mechanism; in a case that sorting is completed for the order container, sending a transferring instruction to a transferring object to instruct the transferring object to transport the order container to a transportation end, which includes a shelf, a cache rack or a first conveyor belt.

A schematic solution of a computing device of the embodiment is described above. It should be noted that the technical solution of the computing device and the technical solution of the above-mentioned goods picking and sorting method belong to the same concept. For details not described in detail in the technical solution of the computing device, reference may be made to the description of the technical solution of the above-mentioned goods picking and sorting method.

The embodiments of the present disclosure further provide a computer-readable storage medium storing computer instructions. When the computer instructions are executed by a processor, the steps of the above-mentioned goods picking and sorting method are implemented.

Specific embodiments of the present disclosure are described above, while other embodiments are within the scope of the appended claims. In some cases, the actions or steps recorded in the claims may be performed in a sequence different from that in the embodiments and still achieve the desired results. In addition, the processes depicted in the accompanying drawings do not necessarily require the specific sequence or continuous sequence shown to achieve the desired results. In some embodiments, multitasking and parallel processing are also possible or may be advantageous.

The computer instructions include computer program codes, which may be in the form of source codes, object codes, executable files or some intermediate forms, etc. The computer readable medium may include: any entity or apparatus capable of carrying the computer program codes, recording medium, USB flash drive, mobile hard disk, magnetic disk, optical disk, computer memory, read-only memory (ROM), random access memory (RAM), electric carrier signal, telecommunication signal and software distribution medium, etc.

**It** should be noted that, for the convenience of description, the aforementioned method embodiments are all described as a combination of a series of actions, but those skilled in the art should be aware that the present disclosure is not limited by the sequence of the actions described, because according to the present disclosure, certain steps can be performed in other sequences or simultaneously. Further, those skilled in the art should also be aware that the embodiments described in the disclosure are all preferred embodiments, and the actions and modules involved are not necessarily required by the present disclosure.

**In** the above embodiments, the description of each embodiment has its own emphasis. For parts that are not described in detail in some embodiments, reference can be made to the relevant descriptions of other embodiments.

The preferred embodiments of the present disclosure disclosed above are only used to help explain the present disclosure. The optional embodiments do not describe all the details in detail, nor do they limit the present disclosure to the specific implementation methods described. Obviously, many modifications and changes can be made according to the content of the present disclosure. The present disclosure selects and specifically describes these embodiments in order to better explain the principles and practical applications of the present disclosure, so that those skilled in the art can well understand and use the present disclosure.

## Claims

1. A goods picking and sorting method, applied to a control end in a goods picking and sorting system, wherein the goods picking and sorting system comprises a picking station, a sorting station and the control end, the picking station and the sorting station share an operating space, and the sorting station comprises a sorting mechanism; the method comprises:
in a case that a to-be-picked container arrives at the picking station, sending a picking and sorting prompt instruction to a picking and sorting object in the operating space to prompt the picking and sorting object to pick goods in the to-be-picked container, and to sort picked goods into an order container pre-placed on the sorting mechanism; and
in a case that sorting is completed for the order container, sending a transferring instruction to a transferring object to instruct the transferring object to transfer the order container for which sorting is completed from the sorting mechanism to a shelf, or to instruct the transferring object to transfer the order container for which sorting is completed from the sorting mechanism to a first conveyor belt, wherein the first conveyor belt is used to transport the order container for which sorting is completed to a target processing point position.

2. The method of claim 1, wherein the sorting station further comprises a box-taking object and a transporting mechanism, and the transporting mechanism is used to transport a to-be-sorted order container to the sorting station;
before sending the picking and sorting prompt instruction to the picking and sorting object in the operating space, the method further comprises:
sending a box-taking instruction to the box-taking object to prompt the box-taking object to transfer the to-be-sorted order container from the transporting mechanism to the sorting mechanism.

3. The method of claim 2, wherein the box-taking object comprises a box-taking mechanism, the transporting mechanism comprises the shelf, and the picking station comprises a picking robot; and sending the box-taking instruction to the box-taking object comprises:
obtaining a grabbing sequence in which the picking robot grabs each to-be-picked container from a picking shelf;
determining, according to the grabbing sequence, an arranging sequence of order containers corresponding to goods in each to-be-picked container;
generating a first box-taking instruction according to the arranging sequence;
sending the first box-taking instruction to the box-taking mechanism to drive the box-taking mechanism to transfer a plurality of order containers from the shelf to corresponding sorting positions of the sorting mechanism according to the arranging sequence.

4. The method of claim 3, wherein generating the first box-taking instruction according to the arranging sequence comprises:
obtaining a number of sorting positions of the sorting mechanism; and
generating the first box-taking instruction according to the arranging sequence and the number of sorting positions;
wherein sending the first box-taking instruction to the box-taking mechanism to drive the box-taking mechanism to transfer the plurality of order containers from the shelf to the corresponding sorting positions of the sorting mechanism according to the arranging sequence comprises:
sending the first box-taking instruction to the box-taking mechanism to drive the box-taking mechanism to transfer the plurality of order containers that meet the number of sorting positions from the shelf to corresponding sorting positions of the sorting mechanism according to the arranging sequence and the number of sorting positions.

5. The method of claim 2, wherein the transporting mechanism comprises a second conveyor belt;
sending the box-taking instruction to the box-taking object comprises:
in a case of detecting that the second conveyor belt transports the to-be-sorted order container to a designated position, generating the box-picking instruction; and
sending the box-taking instruction to the box-taking object to prompt the box-taking object to transfer the to-be-sorted order container from the designated position to the sorting mechanism.

6. The method of claim 2, wherein the transporting mechanism comprises a cache rack, the cache rack is used to place the to-be-sorted order container and/or the order container for which sorting is completed;
sending the box-taking instruction to the box-taking object comprises:
sending the box-taking instruction to the box-taking object to prompt the box-taking object to transfer the to-be-sorted order container from the cache rack to the sorting mechanism.

7. The method of claim 1, further comprising:
obtaining a remaining space in the order container each time sorting is completed for one piece of picked goods, and determining that sorting is completed for the order container in a case that the remaining space reaches a preset space; or,
determining target goods corresponding to the order container, and determining that sorting is completed for the order container in a case that each target goods is sorted into the order container.

8. The method of any of claims 1-7, wherein the sorting mechanism is a sorting rack; the transferring object is a box-taking mechanism;
sending the transferring instruction to the transferring object comprises:
sending the transferring instruction to the box-taking mechanism to drive the box-taking mechanism to transfer the order container for which sorting is completed from the sorting mechanism to the shelf;
wherein the method further comprises:
in a case that sorting is completed for all order containers on the shelf, sending a transporting instruction to a shelf transporting device to schedule the shelf transporting device to transport the shelf to the target processing point position.

9. The method of claim 8, further comprising:
in a case that the order containers on the shelf comprise an order container for which sorting is not completed, sending a second box-taking instruction to the box-taking mechanism to drive the box-taking mechanism to transfer the order container for which sorting is not completed from the shelf to the sorting mechanism.

10. The method of claim 8, wherein the sorting rack comprises a sorting position and a cache position; the method further comprises:
in a case that sorting is completed for the order container and the shelf is moved away, sending a third box-taking instruction to the box-taking mechanism to drive the box-taking mechanism to transfer the order container from the sorting position to the cache position; or
obtaining order information of order containers for which sorting is completed at each sorting position, and determining an order similarity of the order containers according to the order information of the order containers for which sorting is completed, generating a fourth box-taking instruction according to the order similarity, and sending the fourth box-taking instruction to the box-taking mechanism to drive the box-taking mechanism to transfer order containers whose order similarity is higher than a preset threshold from the sorting position to the cache position.

11. The method of claim 3 or 4, wherein after sending the transferring instruction to the transferring object, the method further comprises:
in a case that the to-be-sorted order container exists on the shelf, sending a fifth box-taking instruction to the box-taking mechanism to drive the box-taking mechanism to transfer a new order container from the shelf to the sorting mechanism;
in a case that no to-be-sorted order container exists on the shelf, sending a transporting instruction to a shelf transporting device to schedule the shelf transporting device to move the shelf away and transport a spare shelf to a shelf target placement position, wherein a new order container is stored on the spare shelf, and the shelf target placement position is a placement position of the shelf at the sorting station.

12. The method of any of claims 1-7, wherein the sorting mechanism comprises a sorting platform and the first conveyor belt, and sending the transferring instruction to the transferring object comprises:
sending the transferring instruction to the transferring object according to relative positions of the sorting platform and the first conveyor belt, to instruct the transferring object to transfer the order container for which sorting is completed from the sorting platform to the first conveyor belt.

13. The method of claim 10, wherein the relative positions of the sorting platform and the first conveyor belt are provided in an upper and lower layer arrangement, and the transferring object is a box-hanging mechanism;
sending the transferring instruction to the transferring object according to the relative positions of the sorting platform and the first conveyor belt comprises:
sending the transferring instruction to the box-changing mechanism to drive the box-changing mechanism to transfer the order container for which sorting is completed from the sorting platform to the first conveyor belt.

14. The method of claim 12, wherein the relative positions of the sorting platform and the first conveyor belt are arranged in a same plane and adjacent to each other, and the sorting platform is a conveyor belt structure;
sending the transferring instruction to the transferring object according to the relative positions of the sorting platform and the first conveyor belt comprises:
sending the transferring instruction to the sorting platform to drive the sorting platform to transport the order container for which sorting is completed to the first conveyor belt through the conveyor belt structure.

15. The method of claim 14, wherein sending the transferring instruction to the sorting platform comprises:
in a case that the order container is at a first sorting position, sending the transferring instruction to the sorting platform to drive the sorting platform to directly transport the order container for which sorting is completed to the first conveyor belt through the conveyor belt structure, wherein the first sorting position is a sorting position closest to the first conveyor belt.

16. The method of claim 14, wherein each sorting position on the sorting platform is arranged as an independent conveyor belt structure;
sending the transferring instruction to the sorting platform comprises:
in a case that the order container is at a second sorting position, sending a sixth box-taking instruction to a box-taking mechanism to drive the box-taking mechanism to take out the order container for which sorting is completed from the second sorting position, wherein the second sorting position is any sorting position other than a first sorting position, and the first sorting position is a sorting position closest to the first conveyor belt;
sending a first transferring instruction to the first sorting position and a third sorting position to drive the first sorting position and the third sorting position to transport carried order containers in a direction towards to the second sorting position through the conveyor belt structure, wherein the third sorting position is a sorting position between the first sorting position and the second sorting position;
sending a box-placing instruction to the box-taking mechanism to drive the box-taking mechanism to place a target order container at the first sorting position; and
sending a second transferring instruction to the first sorting position to drive the first sorting position to transport the target order container to the first conveyor belt through the conveyor belt structure.

17. The method of any of claims 1-7, wherein the sorting station further comprises a cache rack, and the transferring object is a box-taking mechanism;
sending the transferring instruction to the transferring object comprises:
sending the transferring instruction to the box-taking mechanism to drive the box-taking mechanism to transfer the order container for which sorting is completed from the sorting mechanism to the cache rack;
wherein the method further comprises:
in a case that sorting is completed for all order containers on the cache rack, sending a scheduling instruction to a shelf transporting device to schedule the shelf transporting device to transport a shelf having a vacant placement position to the sorting station;
sending a transferring instruction to the box-taking mechanism to drive the box-taking mechanism to transfer the order container for which sorting is completed from the cache rack to the shelf having the vacant placement position; and
sending a transporting instruction to the shelf transporting device to schedule the shelf transporting device to transport the shelf with the order container to the target processing point position.

18. The method of claim 17, further comprising:
in a case that the order containers on the cache rack comprise an order container for which sorting is not completed, sending a seventh box-taking instruction to the box-taking mechanism to drive the box-taking mechanism to transfer the order container for which sorting is not completed from the cache rack to the sorting mechanism.

19. The method of any of claims 2-6, wherein the sorting mechanism comprises cache positions; the method further comprises:
obtaining a number of cache positions of the sorting mechanism;
generating an eighth box-taking instruction according to the number of cache positions; and
sending the eighth box-taking instruction to the box-taking object to prompt the box-taking object to transfer a plurality of order containers that meet the number of cache positions from the transporting mechanism to respective cache positions according to the number of cache positions.

20. A goods picking and sorting apparatus, applied to a goods picking and sorting system, wherein the goods picking and sorting system comprises a picking station, a sorting station and a control end, the picking station and the sorting station share an operating space, and the sorting station comprises a sorting mechanism; the apparatus comprises:
a picking and sorting module, configured to, in a case that a to-be-picked container arrives at the picking station, send a picking and sorting prompt instruction to a picking and sorting object in the operating space to prompt the picking and sorting object to pick goods in the to-be-picked container, and to sort picked goods into an order container pre-placed on the sorting mechanism; and
a scheduling module, configured to, in a case that sorting is completed for the order container, send a transferring instruction to a transferring object to instruct the transferring object to transfer the order container for which sorting is completed from the sorting mechanism to a shelf, or to instruct the transferring object to transfer the order container for which sorting is completed from the sorting mechanism to a first conveyor belt, wherein the first conveyor belt is used to transport the order container for which sorting is completed to a target processing point position.

21. A goods picking and sorting system, comprising a picking station, a sorting station and a control end, wherein the sorting station comprises a sorting mechanism;
the picking station and the sorting station share an operating space, a picking and sorting object is located within the operating space, the picking and sorting object is configured to pick goods in a to-be-picked container of the picking station, and to sort picked goods into an order container placed on the sorting mechanism;
the control end is configured to, in a case that the to-be-picked container arrives at the picking station, send a picking and sorting prompt instruction to the picking and sorting object; in a case of identifying that sorting is completed for the order container, send a transferring instruction to a transferring object to instruct the transferring object to transfer the order container for which sorting is completed from the sorting mechanism to a shelf, or to instruct the transferring object to transfer the order container for which sorting is completed from the sorting mechanism to a first conveyor belt, wherein the first conveyor belt is used to transport the order container for which sorting is completed to a target processing point position.

22. A computing device, comprising a memory and a processor;
wherein the memory is configured to store computer-executable instructions, the processor is configured to execute the computer-executable instructions, the goods picking and sorting method of any one of claims 1 to 19 is implemented when the computer-executable instructions are executed by the processor.

23. A computer-readable storage medium for storing computer instructions, wherein when the computer instructions are executed by a processor, the goods picking and sorting method of any one of claims 1 to 19 is implemented.
